# EUROPEAN PATENT SPECIFICATION

(11) **EP 3 883 204 B1**
(45) Date of publication and mention of the grant of the patent: **14.09.2022**
(21) Application number: 20164682.5
(22) Date of filing: 20.03.2020
(51) Int. Cl.: H04L 9/40, H04L 9/32

(54) **SYSTEM AND METHOD FOR SECURE GENERATION, EXCHANGE AND MANAGEMENT OF A USER IDENTITY DATA USING A BLOCKCHAIN**
SYSTEM UND VERFAHREN ZUR SICHEREN ERZEUGUNG, ZUM AUSTAUSCH UND ZUR VERWALTUNG VON BENUTZERIDENTITÄTSDATEN UNTER VERWENDUNG EINER BLOCKCHAIN
SYSTEME ET PROCÉDÉ DE GÉNÉRATION, D'ÉCHANGE ET DE GESTION SÉCURISÉS DE DONNÉES D'IDENTITÉ D'UTILISATEUR A L'AIDE D'UNE CHAÎNE DE BLOCS

(43) Date of publication of application: 22.09.2021
(73) Proprietor: Certsign S.A., 041303 Bucharest (RO)
(72) Inventor: LUPASCU, Alexandru, Sat Viisoara (Com.Tirgu Trotus) (RO); JIANU, Augustin, Bucuresti (RO); GHIBU, Nicolae, Bucuresti (RO)
(74) Representative: Teodorescu, Mihaela

(56) References cited:
- US-A1- 2019 289 012
- US-A1- 2019 303 929
- US-A1- 2020 021 590

## Description

### Field of the invention

This invention relates generally to data distribution among computers in a decentralized network and more particularly to implementing complex functionality that allows secure exchange of verifiable data linked to a subject identity via blockchain, including methods for digital identity management. Advantageously, the invention gives the subject control over access to data linked to its digital identity without storing said data elsewhere than in a subject-controlled device.

### Background

In order to receive services via the Internet, individuals establish accounts with service providers such as government organizations, companies and other entities. These accounts are usually maintained on server computers under the control of the service provider. Such accounts, however, are often vulnerable to security risks such as hacking and identity theft and are frequently out-of-date or inconsistent. Having the same identity data stored in multiple accounts on distinct server computers owned and managed by different service providers leads to unnecessary storage usage due to data duplication. Moreover, this approach does not allow an account to automatically update the stored identity data based on data updates made by other accounts regarding the same identity.

The alternative of having service providers store and manage user identity data in account-based systems is enabling the subject - be it an individual, an organization or an autonomous device - to store and manage its own data on a device controlled by it and to only reveal the necessary data required for a given transaction, interaction or service. This model is sometimes referred to as a "self-sovereign" identity.

The Sovrin Foundation propose in their whitepaper "A Protocol and Token for Self-Sovereign Identity and Decentralized Trust" an open-source blockchain protocol and accompanying token that proposes a solution to self-sovereign identity. The problem with this approach is that it is designed as a "public global utility" and requires using the Sovrin Blockchain which is a blockchain that has been designed only for identity and the Sovrin Token. In order to effectively use this technology, any organization would have to alter its business model to accommodate a highly volatile crypto asset such as the Sovrin Token. Another problem faced by this solution is that an identity claim validated by a third-party cannot be unilaterally revoked by the third-party outside of a preset expiration date.

Patent literature US 2020/021590 A1 discloses a blockchain based method for authentication, authorization and accounting in which the blockchain is used to publish an identity request, to publish identity acknowledgement and to publish the requested and performed services.

The present invention addresses self-sovereign identity requirements over any type of blockchain or decentralized ledger, without needing to acquire a specific crypto asset and change business processes by a computer- implemented method as depicted herein.

### Summary

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the devices and combinations particularly pointed out in the appended claims. These and other features of the described technologies will become more fully apparent from the following description and appended claims, or may be learned by the practice of the disclosed concepts as set forth herein.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In this document we use the term "blockchain" to include all forms of electronic, computer-based, distributed ledgers, including, but not limited to, consensus-based blockchain and transaction-chain technologies, permissioned and un-permissioned ledgers, shared ledgers and variation thereof. The most widely known application of blockchain technology is the Bitcoin ledger, although many other blockchain implementations have been proposed and developed. While Bitcoin may be referred herein for the purpose of convenience and illustration, it should be noted that the invention is not limited to use with the Bitcoin blockchain and alternative blockchain implementations fall within the scope of the present invention. It is generally assumed that users of a blockchain are identifiable by way of digital identifiers or addresses and that the blockchain uses said digital identifiers to authenticate users by way of digital signatures that accompany all blockchain transactions.

This document generally describes systems and methods for using blockchain, to facilitate secure distribution on a computing network of data that is authenticated with a certain degree of confidence as belonging to and linked to a digital identity representing a subject (individual, organization or autonomous device).

Because a blockchain is immutable, storing personal data on a blockchain, even in an encrypted form, is not a good security practice as decryption keys can at some point be made public by accident or as a result of hacking. It is therefore necessary that the blockchain only store hashed data and encrypted hashes of data, because the original data cannot usually be obtained from a hash.

Examples described herein relate to blockchain-based identity management and identity data exchange platforms. In an example approach, identity information (e.g., an address) for a person can be hashed and subsequently encrypted and stored in a blockchain as part of enrolling a person as a platform user. Trust can be provided by a root user (e.g., the platform manager or owner) that authorizes other users as trusted third-parties by recording the authorization on the blockchain. Users can create their own digital identifier. The authorized trusted third-parties enroll users in the platform by collecting user data in a secure way (e.g., face-to-face verification), storing encrypted hashes of said data on the blockchain along with the user's digital identifier. The data attributes collected are enriched by the third-party with at least an assurance level for each proof of validity and an expiration date. Data exchanges between a user and other users can be authorized by the trusted third-party that verified the user's attributes. Authorization involves a multi-stage verification process that accesses information stored on the blockchain. Records of user access to other user's data and confirmations by trusted third-parties are also stored in the blockchain.

In some implementations, service providers such as financial institutions or government agencies may advantageously use these methods to share their Know Your Customer (KYC) processes while substantially reducing costs related to user enrolment and risks regarding unauthorized access to user data. For example, a service provider that has enrolled a user may require another service provider, with whom the KYC process has been shared, to pay the enroller for each data attribute that requires authentication.

Conversely, users may advantageously use these methods to share their data attributes, authenticated at a specific level of assurance, with a new service provider without needing to go through redundant verifications.

Some implementations of the subject matter described herein include a computer-implemented method. The method can include accessing a blockchain that identifies a plurality of authorized third-parties and a plurality of proofs that link user digital identities to their data attributes. Instances of the blockchain can be separately maintained by each of a plurality of nodes in the computing network. A computing device may obtain, using information contained in the blockchain and an identifier (e.g. a public key) provided by another computing device controlled by the user, a particular assertion obtained from the plurality of proofs recorded on the blockchain. The particular assertion obtained by the computing device can be recreated using the data provided by the user's computing device and a secret key received via the blockchain from a computing device in the plurality of computing devices controlled by trusted third-parties. The secret key is created based on a public key associated with the computing device and a public key associated with the computing device controlled by the trusted third-party. After obtaining the secret key, the specific assertion can be recreated by using the secret key and the data attributes provided by the computing device controlled by the user. The recreated assertion can be compared with the assertion provided by the computing device controlled by the trusted third-party.

These and other implementations can optionally include one or more of the following features.

A computing device within the network can run software that facilitates reading and writing data from and to the blockchain, directly or via a remote software service.

The blockchain can store data that identifies data attributes verified by a plurality of trusted third-parties.

A computing device within the network can be one of the plurality of nodes in the computing network that maintains a respective instance of the blockchain, and a first instance of the blockchain can be stored at the computing device.

The present invention provides a solution that is not dependent to a particular type of blockchain. In addition, the invention described herein provides methods by which a trusted third-party that has verified the validity of an identity claim at a certain point in time, can revoke any assertion issued based on said verification (i.e. a university can revoke the "student" status of an identity). The disclosed embodiments provide a specific example of a self-sovereign identity system architecture.

The foregoing and other objects, features, and advantages of the invention will become more apparent from the following detailed description, which proceeds with reference to the accompanying figures.

### Description of drawings

FIG. 1 shows a conceptual diagram of a distributed computing system for securely sharing and authenticating digital identity data attributes based on a decentralized network of computing nodes maintaining a distributed ledger.
FIG. 2 is a schematic diagram illustrating the chronology of transactions recording information on a ledger in a computing system for securely sharing and authenticating digital identity data attributes based on a decentralized network of computing nodes;
FIG. 3 is a flow diagram illustrating interactions between computing devices acting as components of a distributed computing system for securely sharing and authenticating digital identity data attributes based on a decentralized network of computing nodes;
FIG. 4 shows a data dependency diagram illustrating dependencies between data objects in a distributed computing system for securely sharing and authenticating digital identity data attributes based on a decentralized network of computing nodes;
FIG. 5 depicts a block diagram of an example of a distributed computing system that can be used to perform the operations associated with the computer-implemented methods and other techniques described herein according to an embodiment of the present disclosure on an existing Bitcoin blockchain system.
FIG. 6 is a flowchart of an example process for digital identity creation according to an embodiment of the present disclosure on an existing Bitcoin blockchain system;
FIG. 7 is a flowchart of an example process for data attributes definition according to an embodiment of the present disclosure on an existing Bitcoin blockchain system;
FIG. 8 is a flowchart of an example process for trusted third-party enrollment according to an embodiment of the present disclosure on an existing Bitcoin blockchain system;
FIG. 9 is a flowchart of an example process for data attributes verification according to an embodiment of the present disclosure on an existing Bitcoin blockchain system;
FIG. 10 is a flowchart of an example process for data attributes authentication according to an embodiment of the present disclosure on an existing Bitcoin blockchain system;

### Detailed description

This document generally describes systems, methods, devices, and other techniques for using distributed ledgers (e.g., a distributed blockchain database) to facilitate secure distribution of authenticated data attributes over a distributed computing network. For example, an identity owner may present to an online service provider acting as a data consumer the attributes necessary for delivery of a service. The data attributes may be static such as birth date or dynamic such as address of residency or a digital image of the identity owner. The data attributes may be any type or format of data with the condition that either said type or format is generally known to all network participants (i.e. standard) or a platform owner has previously defined said attribute types by recording their definitions on the blockchain. The attribute types definitions may include attribute name, description and format, and are transparent to each plurality of nodes in a computing network that maintains the distributed ledger. When a user at one of the nodes (i.e., a "data consumer") requests the authentication of a set of attributes provided by the identity owner, the request can be recorded on the blockchain and answered by one or more of the other nodes in the network (i.e., a "trusted third-party"). Moreover, requests posted on the blockchain can be associated with identifiers of both the identity owner and the trusted third-party, allowing the request transaction to also carry a payment to the trusted third-party such as an authentication fee. The request transaction can include additional information that can be used by the third-party to securely respond. The request can cause one or more aspects of a secure response transaction to be automatically carried out, including providing an encrypted response to the data consumer, providing information to the data consumer for decrypting the response, returning the authentication fee in case of an error, or a combination of these.

The system architecture and methods described herein are purposefully designed to provide a solution to the following self-sovereign identity problem: having a reference dataset (e.g. the physical world attributes of a subject) associated with an identifier (i.e. a public key that the subject uses to identify itself) and two computing devices wherein (i) a first computing device stores the identifier together with a degree of certainty (i.e. assurance level) that a first dataset accurately represents said reference dataset , without storing said first dataset and (ii) a second computing device stores said identifier together with a second dataset (i.e. a set of attributes claimed to represent as subset of said reference dataset), without disclosing said second dataset to said first computing device, said second computing device needs to translate in a non-repudiable manner the degree of certainty to the statement that said second dataset accurately represents a subset of the reference dataset.

In some implementations, the techniques described herein can be applied to facilitate reliable, secure distribution of data attributes to a computing system. The blockchain framework can be particularly beneficial to distribute data attributes because of the ability to connect a community of independent users and service providers while ensuring security, transparency and access rights management. One challenge faced by identity owners who wish to share their identity data attributes with others is that, without a trusted third-party, data consumers receiving the data attributes do not have any guarantee that said data attributes are authentic. Moreover, identity owners face the risk of data consumers having access to more data attributes that are actually required for a specific action (e.g., delivery of online service, access control etc.) without consent from the identity owner.

The methods and techniques described herein can, in some implementations, overcome these challenges faced by identity owners. For example, an identity owner may encrypt only specific data attributes to be shared with a data consumer using a secret key, and both the encrypted data attributes and the key can be provided to the data consumer. The secret key itself may be encrypted based on a public key associated with the service provider's identity, so that only the computing system authorized by said service provider is able to use the secret key to access the encrypted data attributes. Furthermore, the data consumer can use the distributed computing system to receive information on the assurance level of said data attributes without a need to send or receive said data attributes. In addition, a trusted third-party relaying information on the assurance level of identity data attributes to a data consumer can do so without storing copies of said data attributes and may respond to a request from a data consumer only if such a request is consented to by the identity owner.

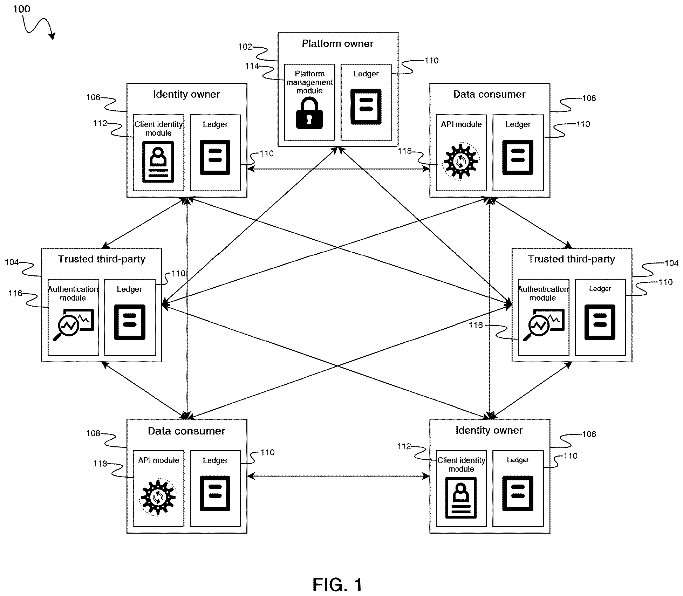

Turning to FIG. 1, a conceptual diagram is shown of a computer implemented system 100 for securely sharing digital identity data attributes using a distributed ledger. The computing system 100 comprises a network of interconnected computing nodes that are variously associated with at most one platform owner 102, at least one trusted third-party 104, at least one identity owner 106, and at least one data consumer 108. In some implementations, the computing nodes are arranged as a distributed or peer-to-peer network, rather than as a centralized "spoke-and-hub" network. The platform owner 102 in the network generally refers to a network participant that (i) authorizes network participants to verify identities of other network participants and (ii) defines the types of data attributes that are verified, shared and validated using the network. The trusted third-parties 104 in the network generally refer to network participants that verify identities of other network participants and provide information on the assurance level of data attributes for verified identities to other network participants. The identity owners 106 in the network generally refer to network participants that make their identity data attributes available for distribution over the network. The data consumers 108 in the network generally refer to network participants that receive data attributes over the network and request and receive information on the assurance levels of data attributes over the network. In some implementations, the platform owner 102, trusted third-parties 104, identity owners 106 and data consumers 108 may be separate participants in the network (i.e., a given network participant may only be classified as part of only one category). In other implementations, however, a given network participant may have multiple roles. For example, a network participant that has defined the types of data attributes and has authorized other network participants to verify data attributes and validate assertions may also be interested in verifying data attributes of other network participants and validating assertions related to said data attributes by responding to requests made by other network participants. In this example, the same user may thus act as both platform owner 102 and trusted third-party 104. In another example, a network participant that verifies data attributes and validates assertions may also be interested to consume identity data attributes verified by other network participants. In this example, the same user may thus act as both trusted third-party 104 and data consumer 108. Based on the previous examples, it stands that a user may also act as all of platform owner 102, trusted third-party 104 and data consumer 108. In another example, a network participant that makes its identity data attributes available for distribution over the network may also need to have some assertions validated regarding the identity data attributes made available by another network participant (e.g. when signing a contract online). In this example, the same user may thus act as both identity owner 106 and data consumer 108.

By way of example, the platform owner 102 in the network is associated with a computing device 114 that includes tools (represented by the platform management module) for defining attribute types and authorizing third-parties, which definitions and authorizations are made available to the network via the ledger 110. Likewise, each of the trusted third-parties 104 in the network is associated with a computing device 116 that includes tools (represented by the authentication module) for storing identity verification proofs on the ledger 110 and automatically responding to attribute authentication requests received from computing devices controlled by data consumers 108. In addition, each of the identity owners 106 in the network is associated with a computing device 112 that includes tools (represented by the client identity module) for receiving data attributes verified by trusted third-parties 104, storing them securely and sharing them over the network. Also, each of the data consumers 108 in the network is associated with a computing device 118 that includes tools (represented by the API module - Application Programming Interface - module) for securely receiving data attributes from computing devices controlled by identity owners 106, requesting and receiving information on data attributes from computing devices controlled by trusted third-parties 104 over the network via the ledger 110.

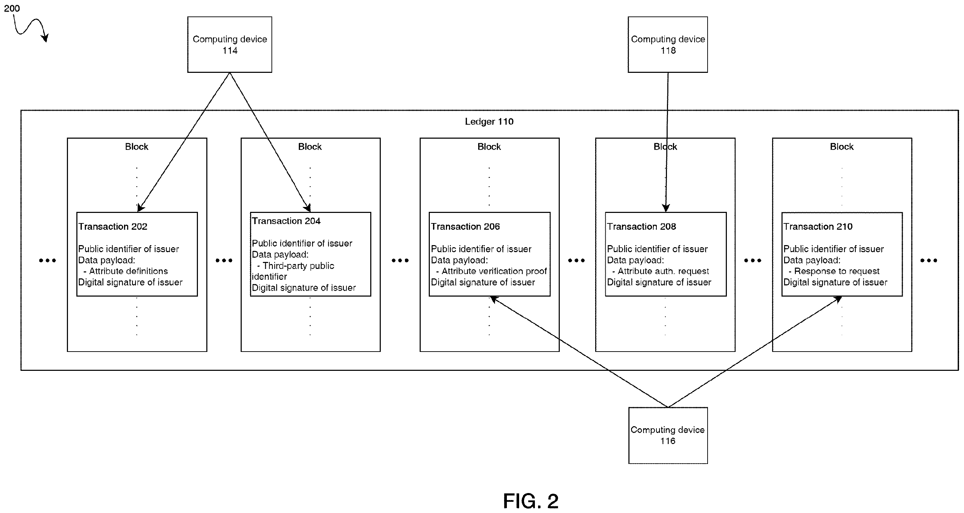

In some implementations, each node in the network of system 100, or each of a proper subset of the nodes in the network, may store and maintain a copy of the electronic ledger 110. The ledger 110 may generally include a chronological sequence of entries of all transactions related to digital identities of network participants and associated data attributes that have been verified and are made available for distribution and authentication over the network. Transactions that are recorded in the ledger 110 may include, for example, authorizations submitted by the platform owner 102 that establish who can verify identities, definitions submitted by the platform owner 102 that describe what attributes can be verified and authenticated, attribute verification proofs submitted by trusted third-parties 104 that show which identities have been verified and by whom, authentication requests submitted by data consumers 108 that may also include payments to trusted third-parties 104, and responses summited by trusted third-parties 104 that are used by data consumers 108 to authenticate data attributes received from identity owners 106. A further description of an example transaction flow recorded on the ledger 110 that may be used in the system 100 is described further below with respect to FIG. 2. The ledger 110 is sometimes referred to as a "distributed ledger" because the ledger 110 is not maintained by a single, central entity that must be trusted by all parties to a transaction, rather, respective copies of the ledger 110 may be maintained at each of a plurality of nodes in the network in a decentralized architecture. When a transaction occurs at any node in the network, an indication of the transaction can be propagated to each of the other nodes in the network that maintains a copy of the distributed ledger 110. Each of the nodes may then perform a validation routine with respect to the transaction. If at least a threshold number of nodes reaches a consensus that the transaction is valid, then the transaction can be permanently recorded in the distributed ledger 110.

Each node in the network may update its respective copy of the ledger 110 separately, but in effect the ledger 110 is identically replicated across the network because the ledger 110 is only updated when a consensus is reached by a threshold portion of the nodes in the network. If at least a threshold level of consensus is not reached, then the transaction may be denied and the ledger is not updated to reflect a change in status among the network participants based on the transaction (e.g., no authentication request is recorded or payment of funds made, although a record may be maintained that a transaction was attempted and failed). Any of the nodes in the network may maintain a copy of the ledger 110. In the example of FIG. 1, each of the network participants (platform owner 102, trusted third-parties 104, identity owners 106 and data consumers 108) maintains a copy of the ledger 110 on their respective computing devices (112, 114, 116, 118). In some implementations, network participants which use computing devices that are limited in some respects (e.g., storage capacity, battery life) may choose not to maintain a copy of the ledger and rely on a separate computing system (i.e., a ledger broker) which provides an API module to interact with the ledger.

In some implementations, the ledger 110 (e.g., blockchain database) may not only store transactional records, but also files comprising a combination of data and executable computer programs. To this end, the blockchain database may be provided, for example, with a Turing-complete programming language. In some implementations, trusted agreements can be created between different users in the network. The conditions of these agreements may be stored in the blockchain database and, since they reside in the blockchain database, the conditions are transparent, thus cannot be covertly modified by one of the parties. In some implementations, programs that, when executed, automatically cause performance of one or more aspects of a data sharing transaction to be performed pursuant to an agreement, can be stored in the blockchain. These programs are sometimes referred to as "smart contracts."

FIG. 2 depicts a chronology 200 of transactions being submitted to a ledger 110. Although some implementations of the ledger may include Directed Acyclic Graphs (DAG), by way of example, the ledger is depicted as a blockchain wherein transactions are depicted as data entries within blocks and are associated with network participants that submit said data to the ledger 110. Regardless of implementation, transactions within a ledger include at least a public identifier of the issuer (that may be used by other network participants to check the validity of an associated digital signature) and a digital signature that guarantees that the transaction was created by the owner of the public identifier and has not been altered. As an example, a network participant may act as platform owner 102 and submit to the ledger 110 a transaction 202 wherein acceptable identity data attribute types are defined. A transaction 202 may include a data payload containing data attribute definitions such that other network participants can use the transaction as a reference point in order to share assurance levels and authenticate identity data attributes. A platform owner may submit to the ledger 110 a data entry by way of a transaction 204 wherein a network participant is deemed authorized to act as trusted third-party 104. A transaction 204 may include the public identifier of the authorized trusted third-party 104 such that other network participants are made aware that the third-party 104 is authorized by the platform owner 102 to verify data attributes of the types defined in transaction 202. A trusted third-party 104, designated as such by a transaction 204, may submit to the ledger 110 a transaction 206 wherein proofs of data attributes verification can be stored, wherein said data attributes are associated with a public identifier of an identity owner 106 and are of the types defined in transaction 202. A network participant, receiving from an identity owner 106 one or more data attributes of types defined by transaction 202, may act as a data consumer 108 by issuing a data attribute authentication request by way of submitting to the ledger 110 a transaction 208. To create an authentication request, the data consumer 108 may search the ledger for a transaction 206 (wherein a third-party 104 stores data attributes verification proofs related to the public identifier of the identity owner 106) and include in the request either an identifier of the transaction 206 or an identifier of the third-party 104 so that the authentication request is directed to a specific third-party 104. In other implementations, a transaction 208 may be associated with the public identifier of the identity owner 106 and a computer code (a "smart-contract"), such that only an issuer of a transaction 206 relating to the identity owner 106 is allowed by the computer code to respond to the authentication request. In some implementations, a transaction 208 may also include payment by the data consumer 108 to the trusted third-party 104, either in the native currency of the ledger or a different convention of value transfer accepted by the network participants. A trusted third-party 104 may respond to an authentication request included in a transaction 208 by submitting to the ledger 110 a transaction 210 containing a response to said request, such that the response does not reveal the data attributes and cannot be used to reverse-engineer or guess said data attributes, but can be used by the data consumer 108 to prove that a trusted third-party has deemed said data attributes of identity owner 106 to be authentic with a certain level of assurance.

A trusted third-party 104, designated as such by a transaction 204, may submit to the ledger 110 a transaction 206 by which proofs of data attributes verification - stored by a previous transaction 206 - are revoked. This technique is especially useful when the data attributes of an identity owner 106 are a result of a temporary or conditioned relationship with the trusted third party 104 (e.g. the identity owner 106 is a student and the trusted third-party 104 is a university). Verification proofs can also be revoked, if their respective data attribute types - previously defined in a transaction 202 - are revoked by a later transaction 202. This technique is especially useful when one or more data attributes definitions become deprecated and/or are replaced by newer definitions.

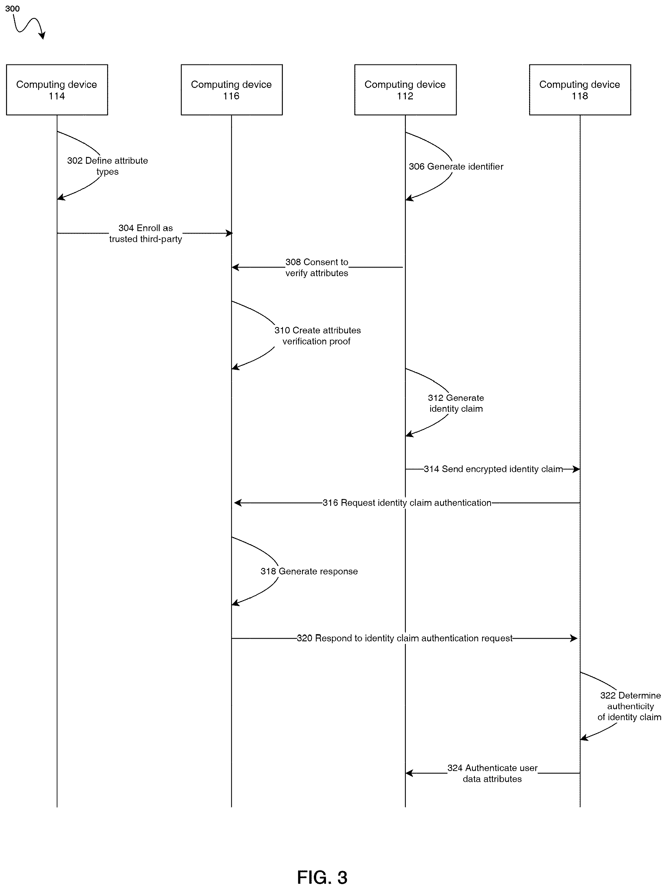

Referring to FIG. 3, an example flow diagram is shown illustrating interactions between computing devices controlled by network participants, such that the computing devices behave as modules of a distributed computing system. The resulting overarching process 300 allows secure sharing and authentication of digital identity data attributes. The process 300 is discussed, by way of example, with respect to data attributes that can be used by computing systems to automate the delivery of services to previously unknown identities to which the data attributes belong. In some implementations, these techniques may be particularly beneficial in circumstances where a service provider is legally or otherwise bound to meet certain levels of assurance regarding the identities to whom it provides services. These techniques may also be particularly beneficial in circumstances where an autonomous device needs to prove to an outside party that it is authorized to perform certain actions such as transporting goods or using certain routes.

The process 300 starts at stage 302 when a platform owner 102 defines the particular data attributes that can be made available for distribution. A data attribute definition should include at least an identifier and data type. At this stage, the computing device 114 controlled by the platform owner 102 records a transaction 202 on the ledger 110 as per the description of FIG. 2.

At stage 304, the platform owner 102 enrolls a trusted third-party 104 in the network, enabling it to verify user identities and record proofs of verifications. At this stage, the computing device 114 records a transaction 204 on the ledger 110 as per the description in FIG. 2. In some implementations, enrollment may involve recording a public identifier (such as a public key) of the trusted third-party 104 on the ledger 110. In other implementations, a trusted-third party 104 may be enrolled by recording on the ledger 110 a plurality of public identifiers which may all be authorized to act on behalf of the trusted third-party 104 and perform the tasks described herein.

At stage 306, an identity owner 106 uses his computing device 112 to generate a digital identifier that it can use to represent itself throughout the network. In some implementation, the digital identifier may be an elliptic curve public-private key pair that can be uses to sign data and initiate secure key exchanges. In other implementations, identity owners may create digital identifiers as RSA (Rivest-Shamir-Adleman) public-private key pair that can be used to sign, encrypt and decrypt data.

At stage 308, the identity owner 106 presents evidence of his data attributes to the trusted third-party 104 for verification. The identity owner 106 uses his computing device 112 and the identifier from stage 306 to generate a signed consent for data attributes verification and overall data processing and send it to the trusted third-party's 104 computing device 116. In some implementations, these techniques may be particularly beneficial in circumstances where the trusted third-party 104 is legally or otherwise bound to prove the identity owner's 106 consent.

At stage 310, the computing device 116 generates identity data attribute verification proofs and stores said proofs along with the identity owner's 106 consent on the ledger 110 by submitting a transaction 206 as per the description of FIG. 2. In some implementations, the data attribute verification proofs are generated by encrypting individual data attribute hashes using a secret key that the trusted third-party 104 stores in a tamper resistant key manager on his computing system. The key may be randomly generated by, or pre-stored on, a cryptographic security module of the computer. The cryptographic security module may be capable of storing multiple keys and/or periodically generating new keys. The same secret key may be later used at stage 318 to decrypt the data attribute hashes. A transaction 206 can also be used to revoke or invalidate verification proofs recorded by way of other transactions 206 at stages 310 of previous processes 300.

At stage 312, the computing device 112 generates and signs an identity claim comprising the identity owner's 106 public identifier from stage 306 and one or more of his attributes, as per the data consumer's 108 requirements. In some implementations, these techniques may be particularly beneficial in circumstances where the identity owner 106 requiring a service from the data consumer 108 does not want to share more about his identity than what is strictly necessary for the delivery of said service. For example, an identity owner 106 can provide his name to be granted access to a location, without disclosing his age or home address.

At stage 314, the computing device 112 securely sends the identity claim generated at stage 312 to the data consumer's 108 computing device 118. In some implementations, this stage can involve key agreement protocol that allows the two parties to establish a shared secret over an insecure channel. These techniques may be particularly beneficial in circumstances where communications channel between parties is not trusted (e.g. the Internet).

At stage 316, the computing device 118 generates an identity authentication request comprising the public identifier of the identity owner 106 obtained at stage 314 and the identifiers of the claimed attributes, as per the attribute definitions of stage 302. These techniques may be particularly beneficial in circumstances where the data consumer 108 is not allowed to disclose to a trusted third-party 104 the values of attributes received from the identity owner 106. The authentication request also includes the first part of a key agreement protocol that allows the two parties to establish a shared secret over an insecure channel, allowing the trusted third-party 104 to encrypt the response such that only the data consumer 108 may decrypt it. At this stage, the computing device 118 records a transaction 208 on the ledger 110 as per the description in FIG. 2. The trusted third-party's 104 computing device 116 scans the ledger 110 for changes and extracts requests relating to any identity verified at stage 310.

At stage 318, the computing device 116 generates a response to the request received at stage 316. In some implementations, the computing device 116 may trigger automatic responses to requests. The computing device 116 extracts from the ledger 110 only the specific attribute verification proofs (out of all proofs generated at stage 310), based on attribute identifiers included in the request. If the attribute identifiers included in the request, refer to attributes for which no verification proof exists or attributes for which verification proofs have been revoked, the process 300 ends with a failure to authenticate. Otherwise, the computing device 116 generates the second part of the key agreement protocol and obtains a shared secret. The response is comprised of the second part of the key agreement protocol and a Message Authentication Code (MAC), constructed from the specific attribute verification proofs and the shared secret, such that the same MAC can be recreated by the computing device 118 from the identity claim received at stage 314 and the shared secret.

At this stage 320, the computing device 116 records a transaction 210 on the ledger 110 as per the description in FIG. 2. These techniques may be particularly beneficial in circumstances where there needs to be un unalterable record of access to identity data without recording identity data or data that may lead to the compromise confidentiality of identity data. These techniques may also be particularly beneficial in circumstances where the third party 104 needs to receive payment from data consumers 108 in order to cover identity verification costs.

At stage 322, the computing device 118 determines the authenticity of the identity claim received at stage 314. In some implementations, the computing device 118 may trigger automatic action based on responses. The computing device reads from the ledger 110 the response recorded at stage 320 and extracts the second part of the key agreement protocol and the MAC. Based on the second part of the key agreement protocol the shared secret is determined. The shared secret is used in conjunction with the attributes received from the computing device 112 at stage 314 to recreate the MAC. If the recreated MAC and the received MAC are the same, then the user attributes are determined to be authentic with a certain degree of confidence. These techniques may be particularly beneficial in circumstances where the data consumer 108 needs non-repudiable, unalterable proof that a trusted third-party 104 has confirmed the authenticity of an identity owner's 106 attributes, without violating the confidentiality of said attributes.

At stage 324, the computing device 118 triggers automated actions such as sending a message to the computer device 112 notifying it of the authentication results. These techniques may be particularly beneficial in circumstances where the identity owner 106 needs to receive a service from a data consumer 108 over un untrusted channel, but the data consumer 108 needs to be able to trust the authenticity of identity data provided by the identity owner 106. For example, these techniques are perfectly suited for granting/receiving a loan remotely without any prior interaction between the involved parties.

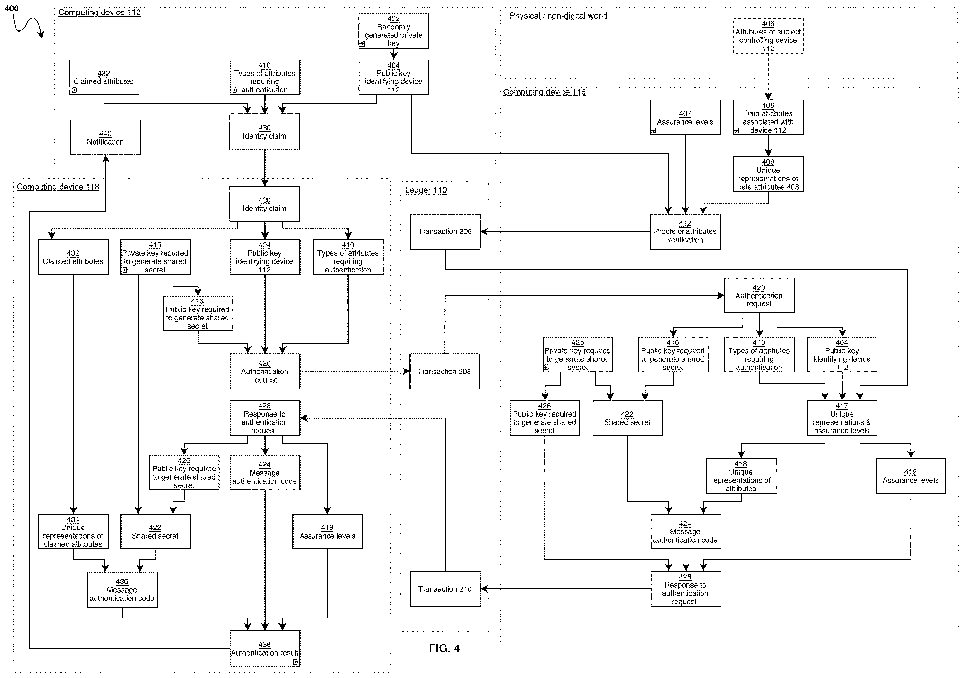

FIG. 4 shows an example diagram of a data structure 400 formed by various data objects found in the memory and storage of a distributed computing system 100. The data structure 400 is discussed, by way of example, with respect to the data objects that can be used to determine the authenticity of data attributes and provide a zero-knowledge audit trail. The example diagram is not meant as an exhaustive description of all data used by the system 100 to generate an output, but rather a simplified description that can be used to better understand the methods and techniques described herein. Data objects that are labeled "unique representations" of data are made by using a non-invertible unidirectional function (i.e. a surjective function that does not allow reverse).

In data structure 400, data objects are classified as user inputs (e.g. the private key 402, the user attributes 408, the types of attributes requiring authentication 410, the private keys 415/425 required to generate a shared secret, the claimed attributes 432) in the system 100, outputs (authentication result 438) of the system 100 and intermediary data objects derived from inputs and required to determine the output. In some implementations the types of attributes requiring authentication 410 can be part of the same input as the claimed attributes 432.

The output 438 is a data object resulting by comparing two other data objects 436/424 called message authentication codes. A message authentication code is a unique representation of a data object that includes a shared secret 422 and a data object 434/418. Because the function used to obtain the MACs 436/424 is unidirectional, data objects 434/418 cannot be inferred or determined by using the MAC or the MAC and the shared secret. Furthermore, because the unique representations 418 and 434 are obtained using a unidirectional function, the user attributes 408 and identity claim 430 cannot be inferred or determined. In other words, inputs cannot be determined based on outputs but having identical outputs can only mean identical inputs.

The public keys 416 and 426 are parts of a key agreement protocol allowing the two parties to establish a shared secret over an insecure channel. In other words, even if the public keys 416 and 426 are public to all users of system 100, only the exchanging parties can determine the secret 422.

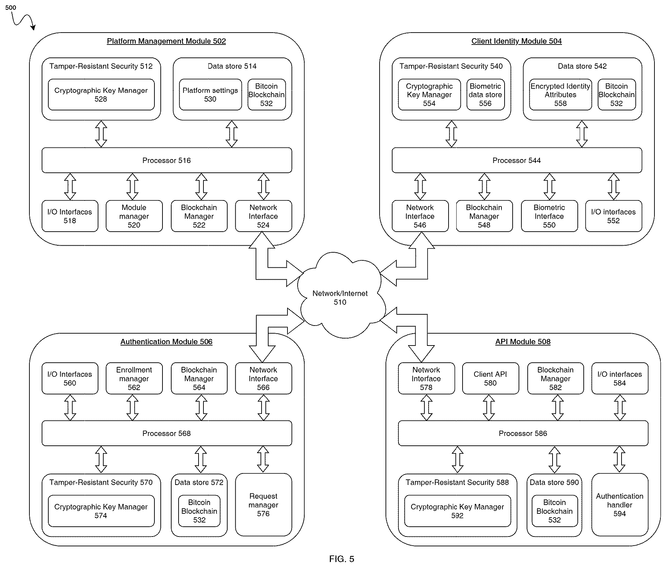

FIG. 5 depicts a block diagram of an example computing system 500, distributed over the existing Internet 510 infrastructure, that is configured to perform the operations associated with the computer-implemented methods and other techniques described herein using an existing Bitcoin blockchain system 532. The distributed computing system 500 represents an example embodiment of system 100. The distributed computing system 500 is composed of at least the following modules: a platform management module 502, one or more client identity modules 504, one or more authentication modules 506 and one or more API modules 508 all of which are equipped with network interfaces 524, 546, 566, 578 and capable to connect using an existent network 510 infrastructure. Modules 502, 504, 506 and 508 include a combination of hardware and software that are collectively configured to perform the operations described herein. In some implementations, any plurality of modules 502, 504, 506 and/or 508 may be implemented on virtualized hardware, which may exist on one or more physical computing systems. In some implementations, any plurality of modules 502, 504, 506 and/or 508 may even be implemented distinct software running on the same hardware (be it virtualized or physical). The system 500 is generally capable of authenticating data attributes describing a user 106 identity without storing said attributes elsewhere than on a user-controlled computing system implementing a client identity module 504. The authentication facilitated by system 500, done via any authentication module 506 does not disclose nor provide any means by which identity attributes could be disclosed to, or inferred by, any network participant without explicit, non-repudiable consent from user 106. The system 500 is thus capable of creating secure channels over the Bitcoin blockchain 532 for non-repudiable data authentication between any two network participants operating an API module 508 and an authentication module 506. The system 500 is also capable of creating secure channels over the network 510 for data distribution between any two participants operating an API module 508 and a client identity module 504.

The platform management module 502 includes a network interface 524 for communicating over a network 510 with other nodes in a computing network. Input/output interfaces 518, such as an external user console or a graphical user interface, can be used to allow the operator 102 of the platform management module 502 to access and alter settings associated with the platform 500 (e.g. supported attribute types), add new trusted third-parties 104 to the platform, browse and if necessary revoke existing agreements with trusted third-parties 104, and more.

The platform management module 502 includes one or more computer processors 516, a blockchain manager 522, a remote module manager 520, a tamper-resistant security module 512, and a data store 514. The tamper-resistant security module further includes a cryptographic key manager 528, and the data store 514 is arranged to store a copy of the bitcoin blockchain 532 and any private platform settings 530. The processors 516 may interact with and pass messages between various components of the platform management module 502.

The data store 514 can store a copy of the bitcoin blockchain 532 and any private settings 530 associated with the system 500, including information on contracts with third-parties 104, a list of active modules, software updates to be dispatched to other modules and more. The blockchain manager 522 is configured to maintain the bitcoin blockchain 532, affect updates to the blockchain 532, generate transactions 202/204 to broadcast to other network nodes, and determine the validity of transactions received from other network nodes. The network interface 524 may broadcast new transactions and receive updates (e.g., new blocks/transactions) related to the blockchain 532. All communications transmitted via the network interface 524 to other network 510 nodes are associated with a public key representing the platform owner 102 and the platform management module 502.

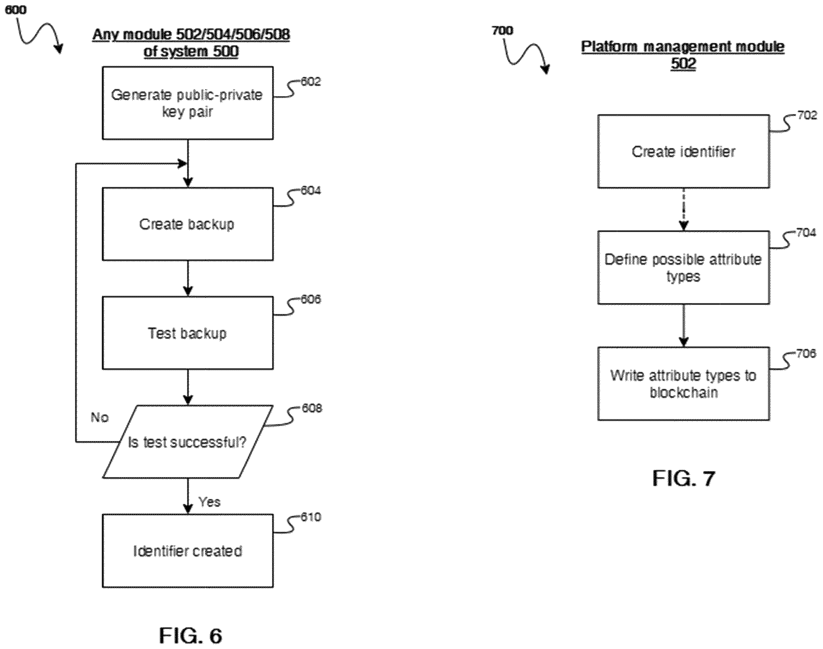

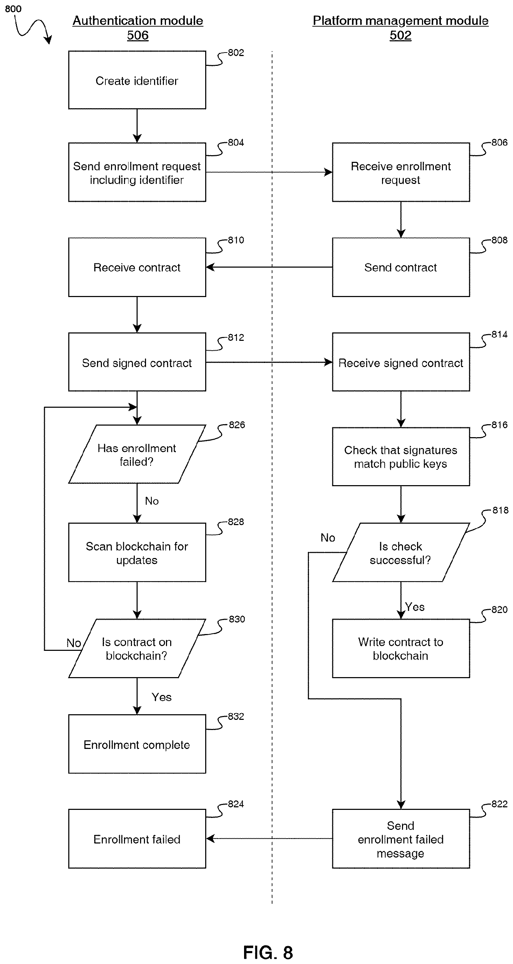

The platform management module 502 is a unique and essential module of any distributed computing system 500. Consequently, the public key associated with a platform management module 502 can also be used to identify the system 500 in a network of nodes that share a blockchain database. Other modules can only be added to a system 500 directly (e.g. authentication modules 506) or indirectly (e.g. client identity modules 504) by the platform owner 102 using a platform management module 502 associated with said system 500. The processes by which authentication modules 506 and client identity modules 504 are registered as components of a system 500 are illustrated in FIG. 7 and FIG. 8 respectively and described in detail further below. By contrast, an API module 508 does not require prior registration with a system 500 in order to connect to and be part of said computing system and interact with its other modules.

The public identifier of the platform management module 502 is the public part of a cryptographic public-private key-pair. The key manager 528 may generate the keys, which are securely stored in the tamper-resistant security module 512. The private key can then be used by the platform management module 502, for example, to sign transactions 202/204 sent to the bitcoin blockchain 532 and broadcasted to other nodes. The tamper-resistant security module 512 includes safeguards that obstruct unauthorized accesses to the keys or other data maintained therein. Examples of standard anti-tamper provisions include epoxy potting, conductive shield layers to prevent reading of internal signals, custom designed chassis and enclosures to prevent probing attacks, and real-time monitoring of environmental conditions such as temperature and power.

Based on information stored in the platform settings 530, the module manager 520 can send messages to any system module, including software updates and notifications on the status of various processes over the network.

A client identity module 504 includes a network interface 546 for communicating over a network 510 with other nodes in a computing network. Input/output (I/O) interfaces 552, such as a console or touchscreen and a graphical user interface, allow the identity owner 106 to generate a digital identifier, access and send his identity attributes to other network participants or receive notifications regarding related system 500 processes. Input/output interfaces 552 include at least one image recording device, such as smartphone camera or webcam that is used in conjunction with a graphic display to send and receive data between the client identity module 504 and the authentication module 506 by way of QR codes (Quick Response). A specialized input interface such as a biometric interface 550 is used to grant access to the client identity module 504 and to the cryptographic key manager 554 exclusively to an identity owner 106 that has previously registered biometric data 556 in the tamper-resistant security module 540.

The client identity module 504 includes one or more computer processors 544, a blockchain manager 548, a tamper-resistant security module 540, and a data store 542. The tamper-resistant security module 540 includes a cryptographic key manager 554 and a biometric data store 555. The data store 542 is arranged to store a copy of the bitcoin blockchain 532 and encrypted identity attributes 558. The processors 544 may interact with and pass messages between various components of the client identity module 504.

The data store 542 can store a copy of the bitcoin blockchain 532 and encrypted identity attributes 558 associated with the identity of the client 106. The blockchain manager 548 is configured to maintain and affect updates to the bitcoin blockchain 532, generate transactions to broadcast to other network nodes, and determine the validity of transactions received from other network nodes. The network interface 546 may broadcast new transactions and receive updates related to the blockchain 532. Communications transmitted via the network interface 546 to other network 510 nodes are associated with a public key which uniquely identifies the identity owner 106 operating the client identity module 504.

The public identifier of the client identity module 504 is the public part of a cryptographic public-private key-pair. The key manager 554 may generate the keys, which are securely stored in the tamper-resistant security module 540. The private key can then be used by the client identity module 504, for example, to sign transactions sent to the bitcoin blockchain 532 and broadcasted to other nodes. The private key may also be used as part of an Elliptic-curve Diffie-Hellman (ECDH) agreement protocol, that allows two parties to establish a shared secret over an insecure channel. For instance, an identity owner 106 operating a client identity module 504 can use the public-private key pair and ECDH to establish a shared secret with a data consumer 108 operating an API module 508. The shared secret can be used by the client identity module 504 to encrypt identity attributes and by the API module 508 to decrypt the identity attributes received from module 504. The tamper-resistant security module 540 may include safeguards that obstruct unauthorized accesses to the keys or other data maintained therein.

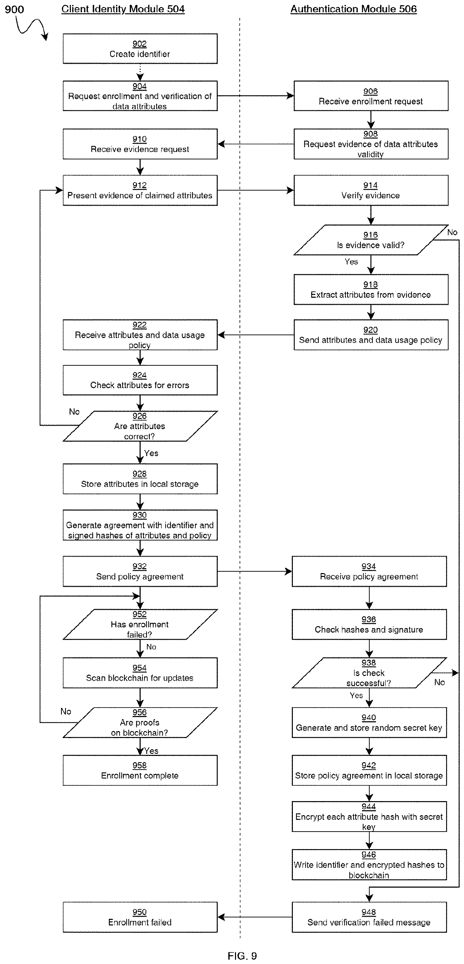

To work as a module of a system 500, a client identity module 504 must be registered by an authentication module 506 which is authorized by said system's 500 platform management module 502. The process 900 by which a client identity module 504 is registered as a module of a distributed computing system 500 involves verifying the identity of said module's user 106 and associating said user's identifier (i.e. public key) with the module 504, and is described further below in relation to FIG. 9. In some implementations, a client identity module 504 could be registered as part of multiple systems 500.

An authentication module 506 includes a network interface 566 for communicating over a network 510 with other nodes in a computing network. Input/output interfaces 560, include at least an external console and a graphical user interface allowing a trusted third party 104 to input attributes, generate verification proofs (i.e. encrypted attribute hashes) and send attributes to the client identity module 504 controlled by the identity owner 106. Input/output interfaces 560 include at least one image recording device, such as smartphone camera or webcam that are used in conjunction with graphic displays to send and receive data between the authentication module 506 and the client identity module 504 via QR codes. In some implementations, specialized hardware interfaces (e.g. ID scanner) can be used to facilitate automation of the evidence verification process done by a trusted third-party 104 operating an authentication module 506.

The authentication module 506 includes one or more computer processors 568, a blockchain manager 564, a tamper-resistant security module 570, and a data store 572. The tamper-resistant security module 570 includes a cryptographic key manager 574. The data store 572 is arranged to store a copy of the bitcoin blockchain 532. The processors 568 may interact with and pass messages between various components of the authentication module 506.

The enrollment manager 562 is configured to receive messages from a client identity module 504, directly through the I/O interfaces 560 via QR codes and other information encoding techniques. In some implementations, the enrollment manager 562 can include an API configured to receive messages from a client identity module 504 via the network interface 566. Messages handled by the enrollment manager 562 include at least a signed agreement/consent of data processing including proofs of attribute verification (i.e. hashes of the verified attributes) signed by the client identity module 504, which are encrypted and recorded on the blockchain 532 via the blockchain manager 564. After recording the proof of verification on the shared blockchain 532 database, the client identity module 504 can take note about his enrollment status message by reading the bitcoin blockchain 532 via the blockchain manager 548.

The blockchain manager 564 is configured to maintain the bitcoin blockchain 532, affect updates to the blockchain 532, generate transactions 206/210 to broadcast to other network nodes, and determine the validity of transactions received from other network nodes. The blockchain manager 564 is also configured to trigger automatic responses in the request manager 576. The network interface 546 may broadcast new transactions and receive updates related to the blockchain 532. Communications transmitted via the network interface 566 to other network 510 nodes are associated with a public identifier of the trusted third-party 104 operating the authentication module 506.

Furthermore, the public identifier of the authentication module 506 is the public part of a cryptographic public-private key-pair. The key manager 574 may generate the keys, which are securely stored in the tamper-resistant security module 570. The private key can then be used by the authentication module 506, for example, to sign transactions 206/210 sent to the bitcoin blockchain 532 and broadcasted to other nodes. The private key may also be used as part of an Elliptic-curve Diffie-Hellman (ECDH) agreement protocol, that allows two parties to establish a shared secret over an insecure channel. For instance, an authentication module 506 can use the public-private key pair and ECDH to establish a shared secret with an API module 508. The shared secret can be used by the authentication module 506 to create a message authentication code (MAC) regarding attributes of an identity owner 106 and used by the API module 508 to recreate the MAC to ascertain the authenticity of identity attributes received from said identity owner 106. The tamper-resistant security module 570 includes safeguards that obstruct unauthorized accesses to the keys or other data maintained therein.

The request manager 576 is configured to scan the blockchain 532 for identity authentication requests issued by any API module 508, which relate to previously verified identities. The request manager 576 extracts the encrypted attribute hashes from a transaction 206 on the blockchain 532 and decrypts them with the corresponding secret key from the key manager 574. The request manager 576 also extracts the ECDH challenge (i.e. the first part of the key agreement protocol) from the request and determines a shared secret and the response (i.e. the second part of the key agreement protocol) to the ECDH challenge. A MAC is generated by hashing a shared secret together with attribute hashes. The request manager 576 then generates a response transaction 210 (including the response to the ECDH challenge and the MAC) and records it on the blockchain 532 via the blockchain manager 564, where it can be read by the authentication handler 594 of the API module 508.

To work as a module of a system 500, an authentication module 506 must be registered by the platform management module 502 of said system 500. The process 800 by which an authentication module 506 is registered as a module of a distributed computing system 500 involves a contract between the platform owner 102 and the third-party 104 operating said module 506 and publicly associating the third-party's 104 public key with the module 506, and is described further below in relation to FIG. 8. In some implementations, an authentication module 506 could be registered as part of multiple distributed computing systems 500.

An API module 508 includes a network interface 578 for communicating over a network 510 with other nodes in a computing network. Input/output interfaces 584, such as an external console or a graphical user interface, can be used to allow a data consumer 108 operating the API module 508 to configure and manage the module, including generating public-private key-pairs.

The API module 508 includes one or more computer processors 586, a blockchain manager 582, a tamper-resistant security module 588, a data store 590 and an authentication handler 594. The tamper-resistant security module 588 includes a cryptographic key manager 592. The data store 590 is arranged to store a copy of the bitcoin blockchain 532. The processors 586 may interact with and pass messages between various components of the API module 508.

Unlike the authentication modules 506 or client identity modules 504, an API module 508 does not require prior registration with a system 500 in order to act as a module of said computing system and interact with its other modules. In some implementations, an API module 508 could connect to and be part of multiple systems 500, provided that the API module 508 has access to the networks 510 and blockchains 532 that the systems 500 are configured to use.

The client API 580 is configured to receive messages from a client identity module 504 (e.g. authentication initiation requests) and respond with messages (e.g. authentication steps). The client API 580 is also configured to write to the blockchain 532 via the blockchain manager 582 transactions 208 regarding any valid request for authentication initiated by a client identity module 504. A request contains data received from the client identity module 504 (e.g. the public key identifying the identity owner 106 operating the client identity module 504), the attribute types (as defined by the most recent transaction 202 issued by the platform management module 502) requiring authentication.

The blockchain manager 582 is configured to maintain the bitcoin blockchain 532, affect updates to the blockchain 532, generate transactions 208 to broadcast to other network nodes, and determine the validity of transactions received from other network nodes. The blockchain manager 582 is also configured to trigger automatic responses in the authentication handler 594. The network interface 578 may broadcast new transactions 208 and receive updates related to the blockchain 532. Communications transmitted via the network interface 578 to other network 510 nodes are associated with the public identifier of a data consumer 108 operating the API module 508.

The public identifier of the API module 508 is the public part of a cryptographic public-private key-pair. The key manager 592 may generate the keys, which are securely stored in the tamper-resistant security module 588. The private key can then be used by the API module 508, for example, to sign transactions 208 sent to the bitcoin blockchain 532 and broadcasted to other nodes. The private key may also be used as part of an Elliptic-curve Diffie-Hellman (ECDH) agreement protocol, that allows two parties to establish a shared secret over an insecure channel. For instance, an API module 508 can use the public-private key pair and ECDH to establish a shared secret with either an authentication module 506 or a client identity module 504. A shared secret established with a client identity module 504 can be used to decrypt encrypted attributes received from the identity owner 106 operating module 504. A shared secret established with an authentication module 506, is used by the API module 508 in conjecture with attributes received from a client identity module 504, to recreate a MAC received from said authentication module 506 via the blockchain 532, in order to ascertain the authenticity of said identity attributes. The tamper-resistant security module 588 includes safeguards that obstruct unauthorized accesses to the keys or other data maintained therein.

The authentication handler 594 is configured to scan the blockchain 532 for transactions 210 which include responses issued by any authentication module 506 to any previously issued identity authentication request recorded on the blockchain 532 by way of a transaction 208. From the received response, the authentication handler 594 extracts a MAC and a response to an ECDH challenge. The response to the ECDH challenge is used to determine the shared secret with which the authentication module 506 has generated the MAC. The MAC is recreated by the authentication handler 594 using the shared secret and attributes received from the client identity module 504 via the client API 580. The two MACs are compared in order to assess the authenticity of the attributes related to an identity owner 106.

Turning to FIG. 6, a flowchart is shown of an example process 600 by which a network participant may use a platform management module 502, client identity module 504, authentication module 506 or API module 508, to securely create a digital identifier (i.e. a public-private key pair) that allows him to interact with other network participants in a distributed computing system 500 representing an embodiment of the present disclosure which uses an existing Bitcoin blockchain 532.

The flowchart 600 generally depicts the actions that any network participant is required to undertake in order to generate a digital identifier that enables interactions with the blockchain 532 and other users of the distributed computing system 500. For simplicity, stages of the process 600 will be described in relation to an identity owner 106 operating a client identity module 504 to generate a public-private key pair necessary to access the bitcoin blockchain 532 and identifying the operated module within a distributed computing system 500. The processes that each module use to create digital identifiers are identical regardless of user and module used (e.g. a platform owner 102 operating a platform management module 502, an identity owner 106 operating a client identity module 504, a third-party 104 operating an authentication module 506, or a data consumer 108 operating an API module 508). As per the description of FIG. 5, all modules of our example embodiment are equipped with cryptographic key managers capable of generating and storing public-private key pairs.

At stage 602, an identity owner 106 uses the I/O interfaces 552 (e.g. a graphic interface accessible via touchscreen) of a client identity module 504 to execute a function of the cryptographic key manager 554 that generates a private key and its corresponding Bitcoin blockchain public key.

At stage 604, the identity owner 106 is prompted via the I/O interfaces 552 to create a backup of the private key generated at stage 602. This is done by providing the identity owner 106 with a plain text mnemonic which can be used to recreate the private key. In some implementations, a copy of the private key is provided to the identity owner 106 in a human readable format (i.e. base 58 encoding). At this stage, the identity owner 106 is instructed to make a backup copy of the mnemonic, by inputting it into a secure backup device (e.g. USB token, cold storage device etc.) or by writing it on a piece of paper that will subsequently be stored in a secure location. The identity owner 106 is also instructed to proceed to the next step of the process only after the backup is complete, and is provided with an interactive interface element that allows him to proceed to the next stage.

At stage 606, the identity owner 106 is prompted via the I/O interfaces 552 to test the backup generated at stage 604. The processor 544 selects a random subset of elements from the mnemonic and instructs the identity owner 106 to input the corresponding elements of the mnemonic in a specific order. The identity owner 106 is provided with interactive interface elements that allow him to return to stage 604 or proceed to stage 608. Following the identity owner's 106 choice to proceed to stage 608, the elements provided by the identity owner 106 are compared with the subset of random elements selected from the mnemonic.

If the backup test made at stage 606 was successful (stage 608), stage 610 ensues. Otherwise, stage 604 follows and the identity owner 106 must repeat stages 604 and 606 until the 608 is successfully completed.

At stage 610, the identity owner 106 is shown a success message and is provided with additional information such as the bitcoin blockchain public key corresponding to the private key generated at stage 602.

Turning to FIG. 7, a flowchart is shown of an example process 700 by which a platform owner 102 may use a platform management module 502 to define all acceptable data attributes types and publish their definitions to the blockchain 532 such that said definitions are available to all users of the distributed computing system 500.

Stage 702 illustrates the process by which a platform owner 102 uses the I/O interfaces 518 of the platform management module 502 to create a digital identifier that allows interaction with other modules of the distributed computing system 500 and the Bitcoin blockchain 532. This process occurring at stage 702 is analogous to process 600 of FIG. 6 and comprises the same stages. Stage 702 does not represent a stage of every process 700 but is a mandatory stage that must be covered only once for stages 704 and 706 to be possible.

At stage 704, the platform owner 102 uses the I/O interfaces 518 to define all acceptable data attributes types. The platform management module 502 provides all interactive interface elements necessary at this stage, allowing the platform owner 102 to input attribute types definitions and proceed to the next stage 706. Each definition includes at least an attribute type identifier (e.g. "FirstName", "Birthdate" etc.) and a corresponding data type (e.g. "text", "date" etc.).

At stage 706, the platform management module 502 generates via the blockchain manager 522 a transaction 202 containing all attribute definitions created by the platform owner at stage 704. If other such transactions 202, defining acceptable attribute types, have previously been issued on the blockchain 532 using the same private key, the current transaction 202 will additionally include a reference to the most recent of said transactions 202. The transaction 202 is automatically signed with the platform owner's 102 private key generated at stage 702 and stored in the cryptographic key manager 528. The signed transaction 202 is written on the blockchain 532 by the blockchain manager 522.

Turning to FIG. 8, a flowchart is shown of an example process 800 by which a platform owner 102 represented by a public key uses a platform management module 502 associated with said public key to link an authentication module 506 to the system 500, by registering to the blockchain 532 a transaction 204 containing a public key representing the third-party 104 operating said module 506. The flowchart 800 generally depicts interactions between a platform owner 102 and a third-party 104 that allow the parties to securely establish a set of terms (i.e. a contract) that are transparent to all network participants. The terms define the actions that the third-party 104 is authorized by the platform owner 102 to perform within the distributed computing system 500.

Stage 802 illustrates the process by which a third-party 104 uses the I/O interfaces 560 of the authentication module 506 to create a digital identifier that allows him to interact with other users of the distributed computing system 500 and the Bitcoin blockchain 532. This process occurring at stage 802 is analogous to process 600 of FIG. 6 and comprises the same stages. Stage 802 is a mandatory stage that must be covered for any process 800 to be possible.

At stage 804, the third-party 104 generates an enrollment request using the I/O interfaces 560 of the authentication module 506. The enrollment request includes at least the third-party's 104 public key, generated at stage 802. In some implementations, the request may also contain detail regarding the level of assurance at which the third-party 104 will be verifying data attributes. The request is signed using the cryptographic key manager 574 - such that the signature that can be checked with the public key enclosed in the request - and sent by the authentication module 506 via the network interface 566 to the platform management module 502. In some implementations, the request can also be sent in physical form (i.e. paper form), electronically by email or through a form on the platform owner's 102 website.

At stage 806, the platform management module 502 receives the enrollment request via the network interface 524 and generates a human and machine readable contract (i.e. a JSON object) including at least the public keys of both platform owner 102 and third-party 104, the terms and conditions which define the actions that the third-party 104 will be authorized to perform within the distributed computing system 500. The contract is signed using cryptographic key manager 528, such that the signature can be verified using the public key of the platform owner 102 enclosed in the contract. In some implementations, stage 806 can include a manual review by the platform owner 102.

At stage 808, the contract generated at stage 806 is sent by the platform management module 502 via the network interface 524 to the authentication module 506 that initiated the request. In some implementations, the contract can also be sent in physical form (i.e. paper contract) or by email.

At stage 810, the authentication module 506 receives the contract via the network interface 566 and checks that the attached signature matches the platform owner's 102 public key enclosed within the contract. The contract is signed using cryptographic key manager 574, such that the signature can be verified using the public key of the third-party 104 enclosed in the contract. In some implementations, stage 810 can include a manual review by the third-party 104.

At stage 812, the contract received and signed at stage 810 is sent by the authentication module 506 via the network interface 566 to the platform management module 502 that sent the contract at stage 808. In some implementations, the contract can also be sent in physical form (i.e. paper contract), by email or through a form on the platform owner's 102 website. Stage 812 is followed both by stage 814 and stage 826, because a successful enrollment of a trusted third party 104 is determined by the authentication module 506 by asynchronously reading the blockchain 532.

At stage 816, the contract received at stage 814 is checked by the platform management module 502 for accuracy and integrity. In some implementations, stage 814 can include a manual review by the platform owner 102. The contents of the contract are checked to be identical to the contents of the contract sent to the authentication module 506 at stage 808. The signatures on the contract are checked to correspond to the public keys enclosed in the contract. In other words, the signatures are verified to have been generated by the platform owner's 102 and third-party's 104 private keys which correspond to the public keys enclosed in the contract. If all the conditions are satisfied (stage 818), the enrollment request can be authorized and the process 800 proceeds to stage 820. If any of the conditions is not satisfied, the platform management module 502 does not enroll the third-party 104 as an authorized operator of an authentication module 506 within the system 500 and denies the request by sending an enrollment failed message (stage 822).

At stage 820, the platform management module 502 generates via the blockchain manager 522 a transaction 204 containing the contract received at stage 814. If other transactions 204 which refer to the same third-party 104 have previously been issued on the blockchain 532, the current transaction 204 will additionally include the reference of the most recent of said transactions 204. The transaction 204 is automatically signed with the platform owner's 102 private key stored in the cryptographic key manager 528. The signed transaction 204 is written on the blockchain 532 by the blockchain manager 522.

At stage 828, if stage 824 has not been reached (stage 826) then the blockchain manager 564 scans the blockchain 532 for a transaction of type 204 by which the platform management module 502 has recorded the signed contract sent by the authentication module 506 at stage 812. The enrolment of the trusted third-party 104 is considered complete at stage 832 if the contract has been found (stage 830) on the blockchain 532.

Turning to FIG. 9, a flowchart is shown of an example process 900 by which a trusted third-party 104 uses an authentication module 506 associated with a system 500 to link a client identity module 504 to said system 500, by registering to the blockchain 532 a public key representing the identity owner 106 operating said module 504. The flowchart 900 generally depicts interactions between a trusted third-party 104 and an identity owner 106, that allow the parties to securely establish a set of verification proofs (i.e. encrypted signed hashes of identity attributes) that are visible to all network participants. The proofs define the attributes regarding which the identity owner 106 has consented that the third-party 104 may authenticate within the distributed computing system 500.

Stage 902 illustrates the process by which an identity owner 106 uses the I/O interfaces 552 of the client identity module 504 to create a digital identifier that allows him to interact with other users of the distributed computing system 500 and the Bitcoin blockchain 532. This process occurring at stage 902 is analogous to process 600 of FIG. 6 and is comprised of the same stages. Stage 902 does not represent a stage of every process 900 but is a mandatory stage that must be covered only once for all other stages to be possible.

Because the example distributed computing system 500 described herein is designed only for "face to face" verifications of identity, which require physical interaction between an identity owner 106 and a trusted third party 104, stages 904 through 914 are performed by human interactions between an identity owner 106 operating a client identity module 504 and a trusted third-party 104 operating an authentication module 506. In other implementations, the authentication module 506 may include a dedicated API by which the client identity module 504 can request enrollment and provide evidence of claimed data attributes.

At stage 912, the identity owner 106 presents physical evidence (e.g. birth certificate) proving the authenticity of claimed attributes. Stage 914 involves human verification of the presented evidence (e.g. documents are inspected for authenticity). In some implementations, the authentication module 506 may include image recording interfaces (i.e. cameras) and be configured to automatically verify the authenticity of identity documents.

If the presented evidence is valid (stage 916), at stage 918 the blockchain manager 564 retrieves from the blockchain 532, the latest transaction 202 signed by the same platform management module 502 which signed the transaction 204 by which the third-party 104 was authorized. The latest attribute definitions are extracted from the transaction 202 and used to generate the attribute input interface elements. The third-party 104 uses the I/O interfaces 560 of the authentication module 506 to input the attributes as per the identity owner's 106 request. In some implementations, module 506 may have a dedicated interface (e.g. ID card reader) or multipurpose interface (e.g. a digital camera) configured to automatically extract attributes (e.g. images, text, etc.) from identity documents. In some implementations, evidence of physical attributes (e.g. fingerprints) may be recorded by specially purposed biometric interfaces of the authentication module 506.

At stage 920, the trusted third-party 104 uses his authentication module 506 to send a message to the identity owner's 106 client identity module 504. The message is generated and displayed on the graphical interface of the authentication module 506 by the enrollment manager 562 as a QR code containing: a data usage policy that the identity owner 106 must agree with in order to use the system 500, the attributes inputted at stage 918 and their respective attribute types.

At stage 922, the identity owner 106 uses the client identity module's 504 image recording device to read the QR code displayed on the authentication module's 506 graphical interface. Enclosed attributes and policy are extracted by parsing the QR code and displayed on the client identity module's 504 graphical interface.

At stage 924, the identity owner 106 checks the accuracy of his attributes, to prevent any input errors (i.e. typing errors) which may have occurred at stage 918. If the attributes are correct (stage 926), the identity owner 106 may use the graphic interface of the client identity module 504 to proceed to stage 928. If the attributes are incorrect (stage 926), the process is resumed at stage 912.

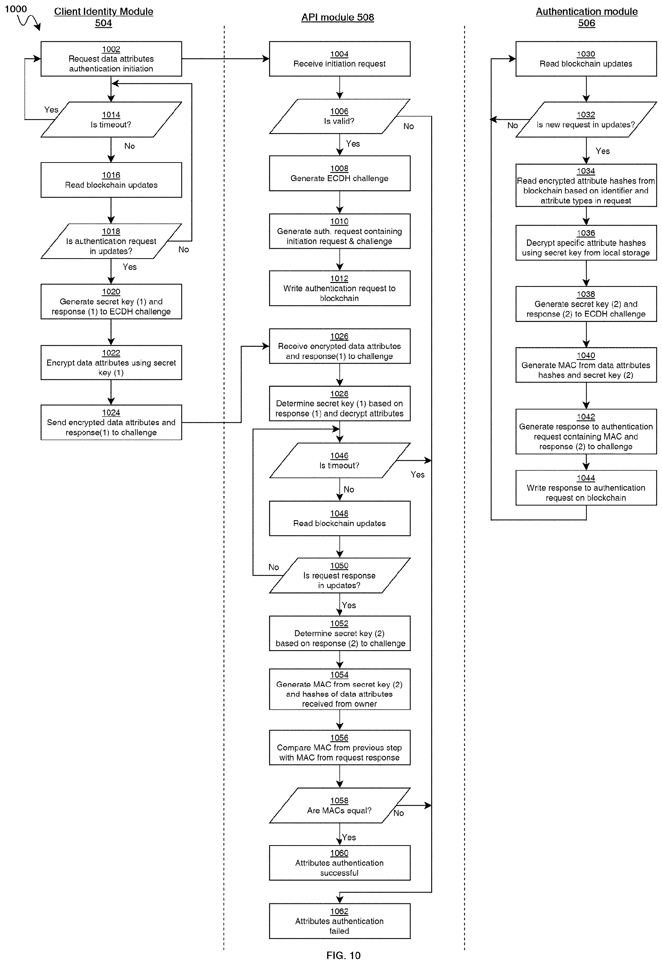

At stage 928, the client identity module 504 encrypts the attributes using a key from cryptographic key manager 554 and stores the encrypted attributes 558 in the data store 542. Attributes can be decrypted on demand by the identity owner 106 and sent to data consumers 108 as illustrated in FIG. 10 and described in detail further below.

At stage 930, the client identity module 504 generates a policy agreement message and signs it using the private key generated at stage 902 and stored in the cryptographic key manager 554. The message contains the data usage policy received at stage 922, the bitcoin blockchain 532 public key generated at stage 902, hashes of the attributes received at stage 928 and their corresponding attribute types.

A QR code containing the message generated at stage 930 is shown (stage 932) on the client identity module's 504 graphical interface where it may be read by the trusted third-party 104 using the authentication module's 506 enrollment manager 562 (stage 934).

At stage 936, the authentication module 506 checks that the hashes from the received message match the attributes inputted at stage 918 and that the signature on the received message corresponds to the same private key as does the public key enclosed in the received message. If the conditions are not met, a failure message is sent (stage 948) by the trusted third-party 104 to the identity owner 106 ending the process 900 (stage 950) with a failure to enroll the identity owner 106 as an authorized operator of a client identity module 504 that is part of the distributed computing system 500.

If all conditions are met (stage 938), stage 940 ensues. At this stage, the authentication module 506 generates a random secret key by using the cryptographic key manager 574. For security reasons, each successful process 900 requires a different secret key. The secret key is stored within the cryptographic key manager 574 in relation with the policy agreement received at stage 934.

At stage 942, the policy agreement received at stage 934 is stored within the data store 572.

At stage 944, the attributes inputted at stage 918 are hashed using a SHA256 function (Cryptographic Hash Algorithm) and the resulting hashes are individually encrypted with the key generated at stage 940 using AES256 (Advanced Encryption Standard 256 bits).

At stage 946, a transaction 206 is generated by the authentication module 506 and recorded on the blockchain 532 via the blockchain manager 564. The transaction 206 includes the identity owner's 106 public key received at stage 934, the encrypted attribute hashes generated at stage 944 and their respective attribute definitions obtained at stage 918.

At stage 954, if stage 950 has not been reached (stage 952) then the blockchain manager 548 scans the blockchain 532 for a transaction of type 206 by which the authentication module 506 has recorded proofs of verification of identity owner's 106 claims. The enrolment of the identity owner 106 is considered complete at stage 958 if the proofs have been found (stage 956) on the blockchain 532.

Turning to FIG. 10, a flowchart is shown of an example process 1000 by which an authentication module 506 authenticates data attributes by validating the identity claims presented by a client identity module 504 to an API module 508. The flowchart 1000 generally depicts interactions between an identity owner 106 operating a client identity module 504, a data consumer 108 operating an API module 508 and an autonomous authentication module 506 acting on behalf of a trusted third-party 104, that allow the parties to securely share authentic data and verifiable identity claims.

At stage 1002, an identity owner 106 operating a client identity module 504 uses the I/O interfaces 552 to generate a request to initiate data attributes authentication. The request contains the public key identifying the client identity module 504 within the distributed computing system 500, the types of data attributes required to receive the desired service from the data consumer 108 operating the API module 508 and a signature that is verifiable with the enclosed public key. The request is sent by the client identity module 504 via the network interface 546 by executing a function of the client API 580. In other implementations, the request can be represented as a QR code which can be read by the API module 508 via an image recording device.

At stage 1004, the API 508 module receives the request sent by the client identity module 504. The signature is checked to have been generated by a private key corresponding to the public key enclosed in the request. The API 508 module uses the blockchain manager 582 to search the blockchain 532 for the latest transaction 206 involving the received public key. In some implementations, attribute verification proofs concerning the same identity can be recorded by a plurality of transactions 206 issued by a plurality of authentication modules 506, whereby each transaction 206 may refer to different attribute types. A subsequent check is performed that a transaction 204 exists authorizing the signatory of transaction 206 to operate an authentication module 506 within the system 500. The latest transaction 202 is retrieved and the attributes types enclosed in the request are checked to be up to date. If the initiation request is not valid (stage 1006) stage 1062 ensues and the process finishes.

At stage 1006, an ECDH challenge is generated using the cryptographic key manager 592. This challenge is used to create two secure channels of communication, one over the network 510 with the client identity module 504 and the other over the blockchain 532 with the authentication module 506. In some implementations, two distinct ECDH challenges may be used to create secure channels with the client identity module 504 and the authentication module 506. Furthermore, the challenges may be distributed via different methods and channels.

At stage 1010, an attribute authentication request is generated. The request contains the initiation request received at stage 1004 (i.e. the public key identifying the identity owner 106, the attributes types corresponding to the identity owner's 106 attributes which require authenticating), the public key of the authentication module 506 retrieved from the blockchain 532 at stage 1004, and the ECDH challenge generated at stage 1008.

At stage 1012, the API module 508 uses the blockchain manager 582 to generate and publish a bitcoin blockchain 532 transaction 208 containing the request generated at stage 1010. In some implementations, the transaction 208 may include a payment for the authentication service provided by the authentication module 506.

At stage 1016, the client identity module 504 uses the blockchain manager 548 to search for blockchain 532 updates that may contain a transaction 208 issued by the API module 508 concerning the authentication initiation request issued at stage 1002. Stage 1016 repeats until the required transaction 208 is found on the blockchain 532 (stage 1018) or a session timeout limit is reached (stage 1014).

At stage 1020, the ECDH challenge is extracted from the transaction 208 and a response (1) and secret key (1) are generated using the cryptographic key manager 554.

At stage 1022, the required encrypted identity attributes 558 are extracted from the data store 542 and decrypted using the cryptographic key manager 554. The attributes are subsequently encrypted using the secret key (1) generated at stage 1020.

At stage 1024, the client identity module 504 sends a signed message to the API module 508 via the client API 580. The message represents an identity claim and contains the encrypted attributes from stage 1022 and the response (1) to the ECDH challenge. In some implementations, the message may be sent to the API module 508 asynchronously as a blockchain 532 transaction.

At stage 1026, the API module 508 receives the message sent by the client identity module 504 at stage 1024. This stage may involve additional verification of the message signature.

At stage 1028, the API module 508 using the cryptographic key manager 592 determines the secret key (1) based on the response (1) received at stage 1026 and the ECDH challenge generated at stage 1008. The encrypted attributes received stage 1026 are decrypted using secret key (1).

At stage 1030, the authentication module 506 uses the blockchain manager 564 to search for blockchain 532 updates that may contain a transaction 208 issued by an API module 508 concerning data attributes of a previously verified identity owner 106 for which a transaction 206 exists on the blockchain 532. The transaction 208 is checked to contain a signed initiation request proving the identity owner's 106 consent. Stage 1030 repeats until a serviceable transaction 208 is found on the blockchain 532 (stage 1032).

At stage 1034, the authentication module 506 extracts the public key of the identity owner 106 and the attribute types from the transaction 208 found at stage 1030. The authentication module 506 using the blockchain manager 564 locates the corresponding transaction 206 on the blockchain 532 and extracts the necessary encrypted attributes based on the attribute types found in transaction 208. The encrypted attributes are subsequently decrypted using the cryptographic key manager 574 at stage 1036.

At stage 1038, the ECDH challenge is extracted from the transaction 208 found at stage 1030 and a response (2) and secret key (2) are generated using the cryptographic key manager 554.

At stage 1040, a message authentication code (MAC) is generated by combining the attributes obtained at stage 1036 and the secret key (2) and applying a SHA256 hashing function on the result.

At stage 1042, a response to the attribute authentication request found at stage 1030 is generated. The response contains the MAC generated at stage 1040, the response (2) generated at stage 1038, and a reference to the transaction 208 containing said attribute authentication request.

At stage 1044, the authentication module 506 uses the blockchain manager 564 to generate and publish a bitcoin blockchain 532 transaction 210 containing the response generated at stage 1042. In some implementations, smart contracts may be used to manage permissions of authentication modules 506 to respond to requests posted by API modules 508.

At stage 1048, the API module 508 uses the blockchain manager 582 to search for blockchain 532 updates that may contain a transaction 210 issued by an authentication module 506 concerning the request recorded on the blockchain at stage 1012. Stage 1048 repeats until the required transaction 210 is found on the blockchain 532 (stage 1050) or a session timeout limit is reached (stage 1046).

At stage 1052, the API module 508 extracts the ECDH challenge response (2) and the MAC from the transaction 210 found at stage 1048. The response (2) and the ECDH challenge generated at stage 1008 are used by the cryptographic key manager 592 to determine the secret key (2).

At stage 1054, the API module 508 recreates the MAC received from the authentication module 506 at stage 1048. The MAC is obtained by combining the attributes obtained at stage 1028 and the secret key (2) obtained at stage 1052, and applying a SHA256 function to the result.

At stage 1056, the API module 508 compares the MAC received from the authentication module 506 at stage 1048 with the MAC recreated at stage 1054. If the MACs are equal (stage 1058) the attribute authentication is successful (stage 1060) and the process 1000 ends.

Any reference to "attributes" equals "data attributes" and they are interchangeable whilst they have the same meaning. The same applies to wording including either "attributes" or "data attributes

In the claims, any reference signs shall not be construed as limiting the scope of the claims.

## Claims

1. A computer-implemented method, comprising:
accessing an electronic ledger 110 that stores (i) a plurality of proofs of verification that attributes associated with a public key have been verified, each with a particular level of assurance, (ii) a plurality of requests concerning attributes associated with a public key and (iii) a plurality of responses to requests, wherein respective instances of the electronic ledger are separately maintained by each of a plurality of nodes in a computing network;
generating, by at least a first computing device 116, a first dataset 408 based on reference dataset of attributes 406, wherein each attribute in the first dataset 408 is (i) a digital representation of a corresponding attribute in the reference dataset 406 and (ii) generated in association with a particular assurance level 407;
generating, by said first computing device 116, a proof of verification 412 comprising at least (i) a first public key 404 associated with the reference dataset 406, (ii) a set of unique representations of each data attribute in the first dataset 408 and (iii) a set of corresponding assurance levels 407 for each unique representation of a data attribute in the first dataset 408;
recording the proof of verification 412 on the ledger 110 by way of a first transaction 206;
obtaining, by at least a second computing device 118, an identity claim 430 from at least a third computing device 112, wherein the identity claim 430 includes at least (i) a second dataset 432 claimed to represent a subset of said reference dataset 406, (ii) corresponding attribute types 410 for each attribute in the second dataset 432 and (iii) said first public key 404 associated with said third computing device 112;
generating, by the second computing device 118, a second public key 416 using a randomly selected first private key 415 and the domain parameters of said ledger 110;
generating, by the second computing device 118, a request 420 as a data object comprising at least (i) the first public key 404 included in the identity claim 430, (ii) the set of attribute-types 410 included in identity claim 430 and (iii) the second public key 416;
recording the request 420 on the ledger 110 by way of a second transaction 208;
obtaining, by said first computing device 116, using information contained in the ledger 110, said particular request 420 among the plurality of requests stored in the ledger;
generating, by the first computing device 116, a third public key 426 based on a randomly selected second private key 425 and the domain parameters of said ledger 110;
determining, by the first computing device 116, a first secret key 422 derived based on the second public key 416 and the second private key 425;
after obtaining the request 420, obtaining, using information contained in the ledger 110 and the request 420, a set of unique representations 418 of attributes and their respective assurance levels 419 from a particular verification proof among the plurality of proofs of verification stored by the ledger 110;
after determining the first secret key 422 and obtaining said set of unique representations 418, generating, by the first computing device 116, a first message authentication code 424 as a unique representation of a data object comprising of (i) the first secret key 422 and (ii) the plurality 418 of unique representations of attributes;
generating, by the first computing device 116, a particular response 428 as a data object comprising at least (i) the first message authentication code 424, (ii) an assurance level 419 for each attribute-type 410 in the request 420, (iii) the third public key 426 and (iv) a reference to the second transaction 208 which identifies the request 420.
recording the particular response 428 on the ledger 110 by way of a third transaction 210;
after recording said second transaction 208 on the ledger 110, obtaining by the second computing device 118, the particular response 428 among the plurality of responses stored in said ledger 110, wherein said particular response 428 is recorded in the ledger 110 by said first computing device 116 in response to the request 420 recorded by the second transaction 208;
determining, by the second computing device 118, said first secret key 422 by using the third public key 426 from said particular response 428 and the first private key 415;
generating, by the second computing device 118, a second message authentication code 436 as a unique representation of a data object comprising (i) the first secret key 422 and (ii) a plurality of unique representations of the attributes in the second dataset 432 included in the identity claim 430;
determining an authentication result 438 by determining in a non-repudiable manner, by the second computing device 118, by comparing the second message authentication code 436 to the first message authentication code 424:
(i) if the second dataset 432 is a subset of the first dataset 408, which represents a reference set 406 with a particular level of assurance 407, and consequently
(ii) for each attribute in second dataset 432, the level of assurance with which it can be stated that it represents an attribute in the reference dataset 406; and
providing a notification from said second computing device 118 to said third computing device 112 associated with the identity claim 430 based on identifying that at least one of the following conditions has occurred:
(i) the second computing device 118 has confirmed the identity claim 430,
(ii) the second computing device 118 has negated the identity claim 430, according to the authentication result 438.

2. The computer-implemented method of claim 1, further comprising:
generating, by a fourth computing device 114, a list of definitions of any possible attribute types, wherein each item of the list comprises at least (i) a type identifier and (ii) a data type description associated to the type identifier;
recording, by the fourth computing device 114, the list of definitions on the ledger 110 by way of at least one transaction 202;
before performing any other action, obtaining, by the first, second and third computing devices 116, 118, 112, the list of definitions by using information stored on the ledger 110.

3. The computer-implemented method of claim 1 or 2, further comprising:
generating, by the fourth computing device 114, an authorization message comprising at least (i) a public key identifying the first computing device 116 and (ii) an indication that the first computing device 116 is either authorized or not authorized to submit proofs of verification and respond to requests;
recording, by the fourth computing device 114, one or more authorization messages on the ledger 110 by way of one or more transactions 204;
after obtaining the particular response 428, verifying by the second computing device 118, that the first computing device 116 that issues said response 428 is authorized by the fourth computing device 114, by using information found on the ledger 110.

4. The computer-implemented method of claim 2 or 3, wherein the fourth computing device 114 can also perform the actions of the first computing device 116.

5. The computer-implemented method of claim 2, 3 or 4, wherein the fourth computing device 114 is one of the plurality of nodes in the computing network that maintains an instance of the ledger 110; and
a first instance of the ledger 110 is stored at the fourth computing device 114.

6. The computer-implemented method of any of the preceding claims, wherein any of the first, second, third computing devices 116, 118, 112 can be one of the plurality of nodes in the computing network that maintains an instance of the ledger 110.

7. The computer-implemented method of any of the preceding claims, further comprising:
before generating the third public key 426, obtaining, by the first computing device 116, a digital signature linked to the request 420 and verifying its validity with the first public key 404.

8. The computer-implemented method of any of the preceding claims, wherein said identity claim 430 further comprises (iv) an identifier and (v) a digital signature derived based on the identity claim 430, further comprising:
before generating the second public key 416, verifying, by the second computing device 118, that (i) the digital signature on the identity claim 430 matches the first public key 404 and that (ii) there is no prior record on the ledger 110 of an identity claim 430 with the same identifier;
before generating the third public key 426, verifying, by the first computing device 116, that (i) the digital signature on the identity claim 430 contained in the request 420 matches the first public key 404 and that (ii) there is no prior record on the ledger 110 of an identity claim 430 with the same identifier.

9. The computer-implemented method of any of the preceding claims, wherein:
the second computing device 118 generates the second public key 416 by multiplying the corresponding first private key 415 with a generator point from the domain parameters of the ledger 110; and
the first computing device 116 generates the third public key 426 by multiplying the corresponding second private key 425 with the generator point from the domain parameters of the ledger 110.

10. The computer-implemented method of any of the preceding claims, wherein:
the first computing device 116 determines the first secret key 422 by multiplying the second public key 416 with the second private key 425 corresponding to the third public key 426; and
the second computing device 118 determines the first secret key 422 by multiplying the third public key 426 with the first private key 415 corresponding to the second public key 416.

11. The computer-implemented method of any of the preceding claims, wherein obtaining the set of unique representations 418 of attributes and their respective assurance levels 419 is carried out by said first computing device 116 by (i) scanning the ledger 110 for all first transactions 206 in which the public key 404 included in the proof of verification 412 matches the first public key 404 included in the identity claim 430 included in the request 420 and (ii) copying, from the proofs of verification 412, the most recent unique representations of data attributes in the first dataset 408 wherein said unique representations correspond to the attribute-types 410 included in said identity claim 430.

12. The computer-implemented method of any of the preceding claims, wherein the first computing device 116 generates the set of unique representations of each data attribute in the first dataset 408 by applying a hash function to each attribute.

13. The computer-implemented method of any of the preceding claims, wherein generating the first message authentication code 424 by said first computing device 116 is carried out by applying a hash function to the data object comprising the first secret key 422 and the plurality 418 of unique representations of attributes and generating the second message authentication code 436 by said second computing device 118 is carried out by applying the hash function on the data object comprising the first secret key 422 and the plurality of unique representations of the second data attributes 432 included in the identity claim 430.

14. The computer-implemented method of any of the preceding claims, further comprising:
encrypting, by said first computing device 116, using a locally stored symmetric encryption key, the unique representations of data attributes in the first dataset 408 before including them in a verification proof 412.

15. A computer-implemented system 100 comprising means for carrying out the method of any preceding claim.

## Patentansprüche

1. Ein computerimplementiertes Verfahren, das Folgendes umfasst:
Zugriff auf ein elektronisches Hauptbuch 110, das Folgendes speichert: (i) eine Vielzahl von Überprüfungsnachweisen, dass Attribute, die mit einem öffentlichen Schlüssel verbunden sind, überprüft wurden, jeweils mit einem bestimmten Grad an Sicherheit, (ii) eine Vielzahl von Anfragen, die Attribute betreffen, die mit einem öffentlichen Schlüssel verbunden sind, und (iii) eine Vielzahl von Antworten auf Anfragen, wobei die jeweiligen Instanzen des elektronischen Hauptbuchs durch jeden aus einer Vielzahl von Knoten in einem Computernetzwerk separat geführt werden;
Erzeugen eines ersten Datensatzes 408 auf der Grundlage eines Referenzdatensatzes von Attributen 406 durch mindestens eine erste Computervorrichtung 116, wobei jedes Attribut in dem ersten Datensatz 408 (i) eine digitale Darstellung eines entsprechenden Attributs in dem Referenzdatensatz A406 ist und (ii) in Verbindung mit einem bestimmten Sicherheitsniveau 407 erzeugt wird;
Erzeugen eines Überprüfungsnachweises 412 durch die erste Computervorrichtung 116, der mindestens (i) einen ersten öffentlichen Schlüssel 404, der mit dem Referenzdatensatz 406 verbunden ist, (ii) einen Satz eindeutiger Darstellungen jedes Datenattributs in dem ersten Datensatz 408 und (iil) einen Satz entsprechender Sicherheitsstufen 407 für jede eindeutige Darstellung eines Datenattributs in dem ersten Datensatz 408 umfasst;
Aufzeichnen des Überprüfungsnachweises 412 in dem Hauptbuch 110 mittels einer ersten Transaktion 206;
Erhalten eines Identitätsanspruchs 430 von mindestens einer dritten Computervorrichtung 112 durch mindestens eine zweite Computervorrichtung 118, wobei der Identitätsanspruch 430 mindestens (i) einen zweiten Datensatz 432, von dem behauptet wird, dass er eine Teilmenge des Referenzdatensatzes 406 darstellt, (ii) entsprechende Attributtypen 410 für jedes Attribut in dem zweiten Datensatz 432 und (iii) den ersten öffentlichen Schlüssel 404, der der dritten Computervorrichtung 112 zugeordnet ist, umfasst;
Erzeugen eines zweiten öffentlichen Schlüssels 416 durch die zweite Rechenvorrichtung 118 unter Verwendung eines zufällig ausgewählten ersten privaten Schlüssels 415 und der Domainparameter des Hauptbuchs 110;
Erzeugen einer Anfrage 420 durch die zweite Computervorrichtung 118 als ein Datenobjekt, das mindestens (i) den ersten öffentlichen Schlüssel 404, der in dem Identitätsanspruch 430 enthalten ist, (ii) den Satz von Attributstypen 410, der in dem Identitätsanspruch 480 enthalten ist, und (iii) den zweiten öffentlichen Schlüssel 416 umfasst;
Aufzeichnen der Anfrage 420 auf dem Hauptbuch 110 mittels einer zweiten Transaktion 208; Erhalten, durch die erste Computervorrichtung 116, unter Verwendung von Informationen, die in dem Hauptbuch 110 enthalten sind, der bestimmten Anfrage 420 aus der Vielzahl von Anfragen, die in dem Hauptbuch gespeichert sind; Erzeugen, durch die erste Computervorrichtung 116, eines dritten öffentlichen Schlüssels 426 basierend auf einem zufällig ausgewählten zweiten privaten Schlüssel 425 und den Domainparametern des Hauptbuchs 110;
Bestimmen eines ersten Geheimschlüssels 422, der auf der Grundlage des zweiten öffentlichen Schlüssels 416 und des zweiten privaten Schlüssels 425 abgeleitet wurde, durch die erste Computervorrichtung 116;
nach Erhalt der Anfrage 420, Ermitteln eines Satzes eindeutiger Darstellungen 418 von Attributen und ihrer jeweiligen Sicherheitsstufen 419 aus einem bestimmten Überprüfungsnachweis aus der Vielzahl von Überprüfungsnachweisen, die im Hauptbuch 110 gespeichert sind, unter Verwendung der im Hauptbuch 110 und in der Anfrage 420 enthaltenen Informationen;
nach der Bestimmung des ersten Geheimschlüssels 422 und dem Erhalt des Satzes von eindeutigen Darstellungen 418, das Erzeugen eines ersten Nachrichten-Authentifizierungscodes 424 durch die erste Computervorrichtung 116 als eine eindeutige Darstellung eines Datenobjekts, das (i) den ersten Geheimschlüssel 422 und (ii) die Vielzahl 418 von eindeutigen Darstellungen von Attributen umfasst;
Erzeugen einer bestimmten Antwort 428 durch die erste Computervorrichtung 116 als ein Datenobjekt, das mindestens (i) den ersten Nachrichten-Authentifizierungscode 424, (ii) ein Sicherheitsniveau 419 für jeden Attributtyp 410 in der Anfrage 420, (iii) den dritten öffentlichen Schlüssel 426 und (iv) eine Referenz auf die zweite Transaktion 208, die die Anfrage 420 identifiziert, umfasst.
Aufzeichnen der besonderen Antwort 428 im Hauptbuch 110 mittels einer dritten Transaktion 210; nach dem Aufzeichnen der zweiten Transaktion 208 im Hauptbuch 110, Erhalten der besonderen Antwort 428 aus der Vielzahl der im Hauptbuch 110 gespeicherten Antworten durch die zweite Computervorrichtung 118, wobei die besondere Antwort 428 im Hauptbuch 110 durch die erste Computervorrichtung 116 als Antwort auf die durch die zweite Transaktion 208 aufgezeichnete Anforderung 420 aufgezeichnet wird;
Bestimmen des ersten Geheimschlüssels 422 durch die zweite Computervorrichtung 118 unter Verwendung des dritten öffentlichen Schlüssels 426 aus der besonderen Antwort 428 und dem ersten privaten Schlüssel 415; Erzeugen eines zweiten Nachrichten-Authentifizierungscodes 436 durch die zweite Computervorrichtung 118 als eine eindeutige Darstellung eines Datenobjekts, das (i) den ersten Geheimschlüssel 422 und (ii) eine Vielzahl eindeutiger Darstellungen der Attribute in dem zweiten Datensatz 432, der in dem Identitätsanspruch 430 enthalten ist, umfasst;
Bestimmen eines Authentifizierungsergebnisses 438, indem die zweite Computervorrichtung 118 durch Vergleichen des zweiten Nachrichten-Authentifizierungscodes 436 mit dem ersten Nachrichten-Authentifizierungscode 424 in einer nicht widerlegbaren Weise bestimmt: (i) ob der zweite Datensatz 432 eine Teilmenge des ersten Datensatzes 408 ist, der einen Referenzdatensatz 406 mit einem bestimmten Zuverlässigkeitsgrad 407 darstellt, und folglich (ii) für jedes Attribut im zweiten Datensatz 432 den Zuverlässigkeitsgrad, mit dem festgestellt werden kann, dass es ein Attribut im Referenzdatensatz 406 darstellt; und Bereitstellen einer Meldung von der zweiten Computervorrichtung 118 an die dritte Computervorrichtung 112, die mit dem Identitätsanspruch 430 verbunden ist, basierend auf der Feststellung, dass mindestens eine der folgenden Bedingungen vorgekommen ist: (i) die zweite Computervorrichtung 118 hat den Identitätsanspruch 430 bestätigt, (ii) die zweite Computervorrichtung 118 hat den Identitätsanspruch 4380 gemäß dem Authentifizierungsergebnis 438 verneint.

2. Das computerimplementierte Verfahren nach Anspruch 1, das ferner umfasst:
Erzeugen einer Liste von Definitionen aller möglichen Attributtypen durch eine vierte Computervorrichtung 114, wobei jedes Element der Liste mindestens (i) einen Typ-Identifikator und (ii) eine dem Typ-Identifikator zugeordnete Datentypbeschreibung umfasst;
Aufzeichnen der Liste von Definitionen im Hauptbuch 110 durch die vierte Computervorrichtung 114 mittels mindestens einer Transaktion 202;
Erhalten der Liste von Definitionen durch die erste, zweite und dritte Computervorrichtung 116, 118, 112 unter Verwendung von im Hauptbuch 110 gespeicherten Informationen, bevor irgendeine andere Aktion ausgeführt wird.

3. Das computerimplementierte Verfahren nach Anspruch 1 oder 2, das ferner umfasst:
Erzeugen einer Autorisierungsnachricht durch die vierte Computervorrichtung 114, die mindestens (i) einen öffentlichen Schlüssel, der die erste Computervorrichtung 116 identifiziert, und (ii) eine Anzeige, dass die erste Computervorrichtung 116 entweder autorisiert oder nicht autorisiert ist, Überprüfungsnachweise zu übermitteln und auf Anfragen zu antworten, umfasst;
Aufzeichnung einer oder mehrerer Autorisierungsnachrichten im Hauptbuch 110 durch die vierte Computervorrichtung 114 mittels einer oder mehrerer Transaktionen 204;
nach Erhalt der bestimmten Antwort 428 Überprüfung durch die zweite Computervorrichtung 118, dass die erste Computervorrichtung 116, die die Antwort 428 ausgibt, durch die vierte Computervorrichtung 114 autorisiert ist, unter Verwendung der im Hauptbuch 110 gefundenen Informationen.

4. Das computerimplementierte Verfahren nach Anspruch 2 oder 3, wobei die vierte Computervorrichtung 114 auch die Aktionen der ersten Computervorrichtung 116 ausführen kann.

5. Das computerimplementierte Verfahren nach Anspruch 2, 3 oder 4, wobei die vierte Computervorrichtung 114 einer der mehreren Knoten in dem Computernetzwerk ist, der eine Instanz des Hauptbuchs 110 unterhält; und eine erste Instanz des Hauptbuchs 110 auf der vierten Computervorrichtung 114 gespeichert ist.

6. Das computerimplementierte Verfahren nach einem der vorangegangenen Ansprüche, wobei jede der ersten, zweiten und dritten Computervorrichtungen 116, 118, 112 einer der mehreren Knoten im Computernetzwerk sein kann, der eine Instanz des Hauptbuchs 110 unterhält.

7. Das computerimplementierte Verfahren nach einem der vorangegangenen Ansprüche, das ferner Folgendes umfasst: vor der Erzeugung des dritten öffentlichen Schlüssels 426 das Erhalten einer mit der Anfrage 420 verbundenen digitalen Unterschrift durch die erste Computervorrichtung 116 und das Überprüfen ihrer Gültigkeit mit dem ersten öffentlichen Schlüssel 404.

8. Das computerimplementierte Verfahren nach einem der vorhergehenden Ansprüche, wobei der Identitätsanspruch 430 ferner (iv) einen Identifikator und (v) eine digitale Unterschrift, die auf der Grundlage des Identitätsanspruchs 430 abgeleitet wurde, aufweist, ferner umfassend:
vor dem Erzeugen des zweiten öffentlichen Schlüssels 416, die Überprüfung durch die zweite Computervorrichtung 118, dass (i) die digitale Unterschrift auf dem Identitätsanspruch 430 mit dem ersten öffentlichen Schlüssel 404 übereinstimmt und dass (ii) es keinen früheren Eintrag eines Identitätsanspruchs 430 mit demselben Identifikator im Hauptbuch 110 gibt;
vor dem Erzeugen des dritten öffentlichen Schlüssels 426 die Überprüfung durch die erste Computervorrichtung 116, dass (i) die digitale Unterschrift des Identitätsanspruchs 430, die in der Anfrage 420 enthalten ist, mit dem ersten öffentlichen Schlüssel 404 übereinstimmt und dass (ii) es keinen vorherigen Eintrag eines Identitätsanspruchs 430 mit demselben Identifikator in dem Hauptbuch 110 gibt.

9. Das computerimplementierte Verfahren nach einem der vorhergehenden Ansprüche, wobei: die zweite Computervorrichtung 118 den zweiten öffentlichen Schlüssel 416 durch Multiplikation des entsprechenden ersten privaten Schlüssels 415 mit einem Generatorpunkt aus den Domainparametern des Hauptbuchs 110 erzeugt; und
die erste Computervorrichtung 116 den dritten öffentlichen Schlüssel 426 durch Multiplikation des entsprechenden zweiten privaten Schlüssels 425 mit dem Generatorpunkt aus den Domainparametern des Hauptbuchs 110 erzeugt.

10. Das computerimplementierte Verfahren nach einem der vorhergehenden Ansprüche, wobei: die erste Computervorrichtung 116 den ersten Geheimschlüssel 422 durch Multiplikation des zweiten öffentlichen Schlüssels 416 mit dem zweiten privaten Schlüssel 425 bestimmt, der dem dritten öffentlichen Schlüssel 426 entspricht; und
die zweite Computervorrichtung 118 den ersten Geheimschlüssel 422 durch Multiplikation des dritten öffentlichen Schlüssels 426 mit dem ersten privaten Schlüssel 415 bestimmt, der dem zweiten öffentlichen Schlüssel 416 entspricht.

11. Das computerimplementierte Verfahren nach einem der vorhergehenden Ansprüche, wobei das Erhalten des Satzes von eindeutigen Darstellungen 418 von Attributen und ihrer jeweiligen Sicherheitsstufen 419 durch die erste Computervorrichtung 116 ausgeführt wird, indem (i) das Hauptbuch 110 nach allen ersten Transaktionen 206 gescannt wird, bei denen der öffentliche Schlüssel 404, der in dem Überprüfungsnachweis 412 enthalten ist, mit dem ersten öffentlichen Schlüssel 404 übereinstimmt, der in dem Identitätsanspruch 430 enthalten ist, der in der Anfrage 420 enthalten ist, und (ii) Kopieren, aus den Überprüfungsnachweisen 412 die jüngsten eindeutigen Darstellungen von Datenattributen im ersten Datensatz 408, wobei die eindeutigen Darstellungen den Attributstypen 410 entsprechen, die in dem Identitätsanspruch 430 enthalten sind.

12. Das computerimplementierte Verfahren nach einem der vorhergehenden Ansprüche, wobei die erste Computervorrichtung 116 die Menge der eindeutigen Darstellungen jedes Datenattributs im ersten Datensatz 408 durch Anwendung einer Hash-Funktion auf jedes Attribut erzeugt.

13. Das computerimplementierte Verfahren nach einem der vorhergehenden Ansprüche, wobei die Erzeugung des ersten Nachrichten-Authentifizierungscodes 424 durch die erste Computervorrichtung 116 durch Anwendung einer Hash-Funktion auf das Datenobjekt erfolgt, das den ersten geheimen Schlüssel 422 und die Vielzahl 418 eindeutiger Darstellungen von Attributen umfasst, und die Erzeugung des zweiten Nachrichten-Authentifizierungscodes 436 durch die zweite Computervorrichtung 118 durch Anwendung der Hash-Funktion auf das Datenobjekt erfolgt, das den ersten geheimen Schlüssel 422 und die Vielzahl eindeutiger Darstellungen der zweiten Datenattribute 432 umfasst, die in dem Identitätsanspruch 430 enthalten sind.

14. Das computerimplementierte Verfahren nach einem der vorhergehenden Ansprüche, das ferner Folgendes umfasst:
Verschlüsseln der eindeutigen Darstellungen der Datenattribute im ersten Datensatz 408 durch die erste Computervorrichtung 116 unter Verwendung eines lokal gespeicherten symmetrischen Verschlüsselungsschlüssels, bevor sie in einen Überprüfungsnachweis 412 aufgenommen werden.

15. Ein computerimplementiertes System 100, das Mittel zum Ausführen des Verfahrens nach einem der vorhergehenden Ansprüche umfasst.

## Revendications

1. Procédé mis en oeuvre par ordinateur, comprenant :
accéder à un registre électronique 110 qui stocke (i) une pluralité de preuves de vérification que des attributs associés à une clé publique ont été vérifiés, chacune avec un niveau d'assurance particulier, (ii) une pluralité de demandes concernant des attributs associée à une clé publique et (iii) une pluralité de réponses aux requêtes, dans lequel des instances respectives du registre électronique sont maintenues séparément par chacun d'une pluralité de noeuds dans un réseau informatique;
générer, par au moins un premier dispositif informatique 116, un premier ensemble de données 408 basé sur ensemble de données de référence d'attributs 406, dans lequel chaque attribut dans le premier ensemble de données 408 est (i) une représentation numérique d'un attribut correspondant dans l'ensemble de données de référence 406 et (ii) généré en association avec un niveau d'assurance particulier 407;
générer, par ledit premier dispositif informatique 116, une preuve de vérification 412 comprenant :
au moins (i) une première clé publique 404 associée à l'ensemble de données de référence 406, (ii) un ensemble de représentations uniques de chaque attribut de données dans le premier ensemble de données 408 et (iii) un ensemble de niveaux d'assurance correspondants 407 pour chaque représentation unique d'un attribut de données dans le premier ensemble de données 408;
enregistrer la preuve de vérification 412 sur le registre 110 au moyen d'une première transaction 206;
obtenir, par au moins un deuxième dispositif informatique 118, un revendication d'identité 430 à partir d'au moins un troisième dispositif informatique 112, dans lequel la revendication d'identité 430 comprend au moins (i) un deuxième ensemble de données 432 revendiqué pour représenter un sous-ensemble du dit ensemble de données de référence 406, (ii) les types d'attributs correspondants 410 pour chaque attribut dans le deuxième l'ensemble de données 432 et (iii) ladite première clé publique 404 associée audit troisième dispositif informatique 112 ;
générer, par le deuxième dispositif informatique 118, une deuxième clé publique 416 à l'aide d'une première clé privée 415 sélectionnée de manière aléatoire et des paramètres de domaine dudit registre 110;
générer, par le deuxième dispositif informatique 118, une requête 420 en tant qu'objet de données comprenant au moins (i) la première clé publique 404 incluse dans la revendication d'identité 430, (ii) l'ensemble de types d'attributs 410 inclus dans la revendication d'identité 430 et (iii) la deuxième clé publique 416;
enregistrer la demande 420 sur le registre 110 par le biais d'une seconde transaction 208 ; obtenir, par ledit premier dispositif informatique 116, à partir d'informations contenues dans le registre 110, ladite requête particulière 420 parmi la pluralité de requêtes stockées dans le registre;
générer, par le premier dispositif informatique 116, une troisième clé publique 426 sur la base d'une deuxième clé privée 425 sélectionnée aléatoirement et des paramètres de domaine dudit registre 110;
déterminer, par le premier dispositif informatique 116, une première clé secrète 422 dérivée sur la base de la deuxième clé publique 416 et de la deuxième clé privée 425;
après obtenir la requête 420, l'obtention, à l'aide des informations contenues dans le registre 110 et la requête 420, d'un ensemble de représentations uniques 418 d'attributs et de leurs niveaux d'assurance respectifs 419 à partir d'une preuve de vérification particulière parmi la pluralité de preuves de vérification stockées par le registre 110;
après avoir déterminé la première clé secrète 422 et obtenu ledit ensemble de représentations uniques 418, générer, par le premier dispositif informatique 116, un premier code d'authentification de message 424 en tant que représentation unique d'un objet de données comprenant (i) la première clé secrète 422 et (ii) la pluralité 418 de représentations uniques des attributs;
générer, par le premier dispositif informatique 116, une réponse particulière 428 en tant qu'objet de données comprenant au moins (i) le premier code d'authentification de message 424, (ii) un niveau d'assurance 419 pour chaque type d'attribut 410 dans la requête 420, (iii ) le troisième clé publique 426 et (iv) une référence à la deuxième transaction 208 qui identifie la requête 420.
enregistrer la réponse particulière 428 sur le registre 110 au moyen d'une troisième transaction 210;
après l'enregistrement de ladite seconde transaction 208 sur le registre 110, l'obtention par le second dispositif informatique 118 de la réponse particulière 428 parmi la pluralité de réponses stockées dans ledit registre 110, ladite réponse particulière 428 étant enregistrée dans le registre 110 par ledit premier dispositif informatique 116 en réponse à la requête 420 enregistrée par la seconde transaction 208;
déterminer, par le deuxième dispositif informatique 118, ladite première clé secrète 422 en utilisant la troisième clé publique 426 à partir de ladite réponse particulière 428 et la première clé privée 415;
générer, par le deuxième dispositif informatique 118, un deuxième code d'authentification de message 436 en tant que représentation unique d'un objet de données comprenant (i) la première clé secrète 422 et (ii) une pluralité de représentations uniques des attributs dans le deuxième ensemble de données 432 inclus dans la revendication d'identité 430;
déterminer un résultat d'authentification 438 en déterminant de manière non répudiable, par le deuxième dispositif informatique 118,
en comparaison du deuxième code d'authentification de message 436 au premier code d'authentification de message 424:
(i) si le deuxième ensemble de données 432 est un sous-ensemble du premier ensemble de données 408, qui représente un ensemble de référence 406 avec un niveau d'assurance particulier 407, et par conséquent
(ii) pour chaque attribut dans le deuxième ensemble de données 432, le niveau d'assurance avec lequel on peut dire qu'il représente un attribut dans l'ensemble de données de référence 406 ; et
fournir une notification dudit deuxième dispositif informatique 118 audit troisième dispositif informatique 112 associé à la revendication d'identité 430 sur la base de l'identification qu'au moins l'une des conditions suivantes s'est produite:
(i) le deuxième dispositif informatique 118 a confirmé la revendication d'identité 430,
(ii) le deuxième dispositif informatique 118 a annulé la revendication d'identité 430, selon le résultat d'authentification 438.

2. Procédé mis en oeuvre par ordinateur selon la revendication 1, comprenant en outre:
générer, par un quatrième dispositif informatique 114, une liste de définitions de tous types d'attributs possibles, dans lequel chaque élément de la liste comprend au moins (i) un identifiant de type et (ii) une description de type de données associée à l'identifiant de type;
enregistrer, par le quatrième dispositif informatique 114, la liste des définitions sur le registre 110 par l'intermédiaire d'au moins une transaction 202;
avant d'effectuer toute autre action, l'obtention, par les premier, deuxième et troisième dispositifs informatiques 116, 118, 112, de la liste de définitions en utilisant des informations stockées sur le registre 110.

3. Procédé mis en oeuvre par ordinateur selon la revendication 1 ou 2, comprenant en outre:
générer, par le quatrième dispositif informatique 114, un message d'autorisation comprenant au moins (i) une clé publique identifiant le premier dispositif informatique 116 et (ii) une indication que le premier dispositif informatique 116 est autorisé ou non à soumettre des preuves de vérification et à répondre aux demandes;
enregistrer, par le quatrième dispositif informatique 114, un ou plusieurs messages d'autorisation sur le registre 110 au moyen d'une ou plusieurs transactions 204;
après obtenir la réponse particulière 428, vérification par le second dispositif informatique 118, que le premier dispositif informatique 116 qui émet ladite réponse 428 est autorisé par le quatrième dispositif informatique 114, en utilisant les informations trouvées sur le registre 110.

4. Procédé mis en oeuvre par ordinateur selon la revendication 2 ou 3, dans lequel le quatrième dispositif informatique 114 peut également exécuter les actions du premier dispositif informatique 116.

5. Procédé mis en oeuvre par ordinateur selon la revendication 2, 3 ou 4, dans lequel le quatrième dispositif informatique 114 est l'un de la pluralité de noeuds dans le réseau informatique qui maintient une instance du registre 110 ; et
une première instance du registre 110 est stockée au niveau du quatrième dispositif informatique 114.

6. Procédé mis en œuvre par ordinateur selon l'une quelconque des revendications précédentes, dans lequel l'un quelconque des premier, deuxième, troisième dispositifs informatiques 116, 118, 112 peut être l'un de la pluralité de noeuds dans le réseau informatique qui maintient une instance du registre 110.

7. Procédé mis en oeuvre par ordinateur selon l'une quelconque des revendications précédentes, comprenant en outre :
avant de générer la troisième clé publique 426, obtenir, par le premier dispositif informatique 116, une signature numérique liée à la requête 420 et vérifier sa validité avec la première clé publique 404.

8. Procédé mis en oeuvre par ordinateur selon l'une quelconque des revendications précédentes, dans lequel ladite revendication d'identité 430 comprend en outre (iv) un identifiant et (v) une signature numérique dérivée sur la base de la revendication d'identité 430, comprenant en outre:
avant de générer la deuxième clé publique 416, vérifier, par le deuxième dispositif informatique 118, que (i) la signature numérique sur la revendication d'identité 430 correspond à la première public key 404 et que (ii) il n'y a pas d'enregistrement préalable sur le registre 110 d'une revendication d'identité 430 avec le même identifiant;
avant de générer la troisième clé publique 426, vérification, par le premier dispositif informatique 116, que (i) la signature numérique sur la revendication d'identité 430 contenue dans la requête 420 correspond à la première clé publique 404 et que (ii) il n'y a pas d'enregistrement antérieur sur le registre 110 d'une revendication d'identité 430 avec le même identifiant.

9. Procédé mis en oeuvre par ordinateur selon l'une quelconque des revendications précédentes, dans lequel: le second dispositif informatique 118 génère la seconde clé publique 416 en multipliant la première clé privée 415 correspondante par un point générateur à partir des paramètres du domaine du registre 110; et
du premier dispositif informatique 116 génère la troisième clé publique 426 en multipliant la deuxième clé privée correspondante 425 avec le point générateur des paramètres du domaine du registre 110.

10. Procédé mis en oeuvre par ordinateur selon l'une quelconque des revendications précédentes, dans lequel : le premier dispositif informatique 116 détermine la première clé secrète 422 en multipliant la seconde clé publique 416 par la seconde clé privée 425 correspondant à la troisième clé publique 426; et
le second dispositif informatique 118 détermine la première clé secrète 422 en multipliant la troisième clé publique 426 par la première clé privée 415 correspondant à la seconde clé publique 416.

11. Procédé mis en oeuvre par ordinateur selon l'une quelconque des revendications précédentes, dans lequel l'obtention de l'ensemble de représentations uniques 418 d'attributs et de leurs niveaux d'assurance 419 est effectuée par ledit premier dispositif informatique 116 par (i) scanner le registre 110 pour toutes les premières transactions 206 dans lesquelles la clé publique 404 incluse dans la preuve de vérification 412 correspond à la première clé publique 404 incluse dans la revendication d'identité 430 incluse dans la requête 420 et (ii) copier, à partir des preuves de vérification 412, des représentations uniques les plus récentes d'attributs de données dans le premier ensemble de données 408 dans lequel lesdites représentations uniques correspondent aux types d'attributs 410 inclus dans ladite revendication d'identité 430 .

12. Procédé mis en oeuvre par ordinateur selon l'une quelconque des revendications précédentes, dans lequel le premier dispositif informatique 116 génère l'ensemble de représentations uniques de chaque attribut de données dans le premier ensemble de données 408 en appliquant une fonction de hachage à chaque attribut.

13. Procédé mis en oeuvre par ordinateur selon l'une quelconque des revendications précédentes, dans lequel la génération du premier code d'authentification de message 424 par ledit premier dispositif informatique 116 est effectuée en appliquant une fonction de hachage à l'objet de données comprenant la première clé secrète 422 et la pluralité 418 de clés uniques représentations d'attributs et la génération du deuxième code d'authentification de message 436 par ledit deuxième dispositif informatique 118 est effectuée en appliquant la fonction de hachage sur l'objet de données comprenant la première clé secrète 422 et la pluralité de représentations uniques des deuxièmes attributs de données 432 inclus dans la revendication d'identité 430.

14. Procédé mis en oeuvre par ordinateur selon l'une quelconque des revendications précédentes, comprenant en outre:
chiffrer, par ledit premier dispositif informatique 116, à l'aide d'une clé de chiffrement symétrique stockée localement, les représentations uniques d'attributs de données dans le premier ensemble de données 408 avant de les inclure dans une preuve de vérification 412.

15. Système implémenté par ordinateur 100 comprenant des moyens pour exécuter le procédé selon l'une quelconque des revendications précédentes.
